# EUROPEAN PATENT SPECIFICATION

(11) **EP 4 534 419 B1**
(45) Date of publication and mention of the grant of the patent: **21.01.2026**
(21) Application number: 23815802.6
(22) Date of filing: 18.05.2023
(51) Int. Cl.: B64D 45/00, B64C 27/08, B64C 29/00, B64D 27/24, G05D 1/85, G05D 1/495, G05D 109/22, G05D 105/22, B60L 3/00, B60L 3/04, B64D 27/31, B64D 31/09, B64D 27/34, B64D 31/16

(54) **FLIGHT CONTROL DEVICE, FLIGHT CONTROL PROGRAM, AND FLIGHT CONTROL METHOD**
FLUGSTEUERUNGSVORRICHTUNG, FLUGSTEUERUNGSPROGRAMM UND FLUGSTEUERUNGSVERFAHREN
DISPOSITIF DE COMMANDE DE VOL, PROGRAMME DE COMMANDE DE VOL ET PROCÉDÉ DE COMMANDE DE VOL

(30) Priority: 03.06.2022 JP 2022091182
(43) Date of publication of application: 09.04.2025
(73) Proprietor: DENSO CORPORATION, Kariya-city, Aichi 448-8661 (JP)
(72) Inventor: TAKEMURA, Yuichi, Kariya-city, Aichi 448-8661 (JP); FUKUSHI, Masato, Kariya-city, Aichi 448-8661 (JP); FUJII, Keita, Kariya-city, Aichi 448-8661 (JP)
(74) Representative: TBK
(86) International application number: PCT/JP2023/018513
(87) International publication number: WO 2023/234043

(56) References cited:
- WO-A1-2019/168044
- JP-A- 2014 227 155
- JP-A- 2017 100 651
- JP-A- 2018 030 568
- JP-A- 2018 030 568
- JP-A- 2020 199 812
- US-A1- 2020 010 187
- US-B2- 10 737 798

## Description

### TECHNICAL FIELD

The present disclosure relates to a flight control device, a flight control program, and a flight control method.

### BACKGROUND ART

JP 2020-196440 A describes a flight vehicle that flies using multiple rotary blades. A drone is provided with multiple motors that drive the rotary blades to rotate. The multiple motors individually drive the multiple rotary blades to rotate. In the flight vehicle, a flight controller monitors whether each of the motors is rotating normally.

US 2020/010187 A1 discloses an electrically powered vertical take-off and landing aircraft comprising a plurality of propulsion assemblies, each of said propulsion assemblies comprising an electric motor, a plurality of batteries, each of said plurality of batteries coupled to two or more of said electric motors, wherein each of said electric motors comprises a plurality of motor winding circuits, and wherein each of said winding circuits in a motor are coupled to a different battery. Furthermore, US 10 737 798 B2 refers to a rotorcraft system, wherein instructions for reducing power supplied to a motor determined to be malfunctioning and instructions for increasing power supplied to one or more motors selected for redistributing power are generated by a flight computer such that a total thrust of the rotorcraft produced by the plurality of motors remains substantially the same during the reducing the power supplied to the motor determined to be malfunctioning and the increasing the power supplied to the one or more motors selected for redistributing power. Still further, JP 2018-030568 A shows a flight device, wherein an attitude control part changes the pitch of the propellers without stopping thrusters in a normal state, when abnormality occurs on the thruster out of the plural thrusters.

### SUMMARY OF INVENTION

In JP 2020-196440 A, when an abnormality occurs in the motor, it is considered that a monitoring result of the flight controller includes that rotation of the motor in which the abnormality occurs is not normal. However, when an abnormality occurs in the motor, an attitude of the flight vehicle may not be stabilized and safety of the flight vehicle may be decreased.

One object of the present disclosure is to provide a flight control device, a flight control program, and a flight control method capable of enhancing safety of an electric flight vehicle when an abnormality occurs in a flight-motor.

According to the invention, this object is achieved by a flight control device according to claim 1 as well as a corresponding flight control program and flight control method. Further features and advantageous modifications are shown in the dependent claims.

Multiple aspects disclosed in the description adopt different technical means to achieve respective objects. Reference numerals in parentheses in the claims and the section are an example indicating a corresponding relationship with specific means described in an embodiment to be described later as one aspect, and do not limit the technical scope.

In order to achieve the above object, according to a disclosed aspect, a flight control device is configured to control driving of a plurality of flight-motors to maintain an electric flight vehicle, which includes the flight-motors, at a stable attitude. The flight control device comprises: a maintaining determination unit configured to, when an abnormality occurs in the flight-motors, determine whether the electric flight vehicle is capable of maintaining the stable attitude for at least one of a state in which, among the flight-motors, an abnormal motor, in which the abnormality occurs, stops driving and a state in which the abnormal motor continues driving; and an output adjustment unit configured to, based on determination that the electric flight vehicle is capable of maintaining the stable attitude, perform output adjustment of, among the flight-motors, at least one of a normal motor, in which the abnormality does not occur, and the abnormal motor to maintain the electric flight vehicle at the stable attitude.

According to the flight control device described above, when the abnormality occurs in the flight-motors, it is determined whether the electric flight vehicle is capable of maintaining the stable attitude for at least one of the state in which the driving of the abnormal motor is stopped and the state in which the driving of the abnormal motor is continued. Therefore, the attitude of the electric flight vehicle can be estimated without actually stopping or continuing the driving of the abnormal motor.

When it is determined that the electric flight vehicle is capable of maintaining the stable attitude, the output of at least one of the abnormal motor and the normal motor is adjusted to maintain the electric flight vehicle at the stable attitude. Therefore, even if the driving of the abnormal motor is actually stopped or continued, the electric flight vehicle can be maintained at the stable attitude by the abnormal motor and the normal motor.

Thus, safety of the electric flight vehicle can be enhanced when an abnormality occurs in the flight-motors.

According to a disclosed aspect, a flight control program is for controlling driving of a plurality of flight-motors to cause an electric flight vehicle, which includes the flight-motors, to fly at a stable attitude. The flight control program is configured to cause at least one processor to function as: a maintaining determination unit configured to, when an abnormality occurs in the flight-motors, determine whether the electric flight vehicle is capable of maintaining the stable attitude for at least one of a state in which, among the flight-motors, an abnormal motor, in which the abnormality occurs, stops driving and a state in which the abnormal motor continues driving; and an output adjustment unit configured to, based on determination that the electric flight vehicle is capable of maintaining the stable attitude, perform output adjustment of, among the flight-motors, at least one of a normal motor, in which the abnormality does not occur, and the abnormal motor to maintain the electric flight vehicle at the stable attitude.

According to the flight control program described above, similarly to the flight control device, the safety of the electric flight vehicle can be enhanced when an abnormality occurs in the flight-motors.

According to a disclosed aspect, a flight control method is for controlling driving of a plurality of flight-motors to cause an electric flight vehicle, which includes the flight-motors, to fly at a stable attitude. The flight control method is to be performed by at least one processor and comprises: determining, when an abnormality occurs in the flight-motors, whether the electric flight vehicle is capable of maintaining the stable attitude for at least one of a state in which, among the flight-motors, an abnormal motor, in which the abnormality occurs, stops driving and a state in which the abnormal motor continues driving; and performing, based on determination that the electric flight vehicle is capable of maintaining the stable attitude, output adjustment of, among the flight-motors, at least one of a normal motor, in which the abnormality does not occur, and the abnormal motor to maintain the electric flight vehicle at the stable attitude.

According to the flight control method described above, similarly to the flight control device, the safety of the electric flight vehicle can be enhanced when an abnormality occurs in the flight-motors.

### BRIEF DESCRIPTION OF THE DRAWINGS

FIG. 1 is a diagram showing a configuration of an eVTOL in a first embodiment.
FIG. 2 is a block diagram showing an electrical configuration of a flight system and an EPU.
FIG. 3 is a flowchart showing a procedure of a flight control process.
FIG. 4 is a flowchart showing a procedure of a notification process in a second embodiment.
FIG. 5 is a flowchart showing a procedure of a flight control process in a third embodiment.
FIG. 6 is a block diagram showing an electrical configuration of a flight system and an EPU in a fourth embodiment.
FIG. 7 is a flowchart showing a procedure of a flight control process.
FIG. 8 is a block diagram showing an electrical configuration of a flight system and an EPU in a fifth embodiment.
FIG. 9 is a flowchart showing a procedure of a flight control process.

### DESCRIPTION OF EMBODIMENTS

Hereinafter, multiple embodiments for carrying out the present disclosure will be described with reference to the drawings. In each embodiment, the same reference numerals are assigned to portions corresponding to the items described in the preceding embodiments, and a repetitive description thereof may be omitted. In each embodiment, when only a part of the configuration is described, another embodiment previously described can be employed for the other part of the configuration. Not only combinations between portions that are specifically clarified as being able to be used in combination in each embodiment are possible, but also partial combinations between the embodiments whose combination is not specifically clarified are possible as long as no adverse effect is particularly generated on the combination.

### <First Embodiment>

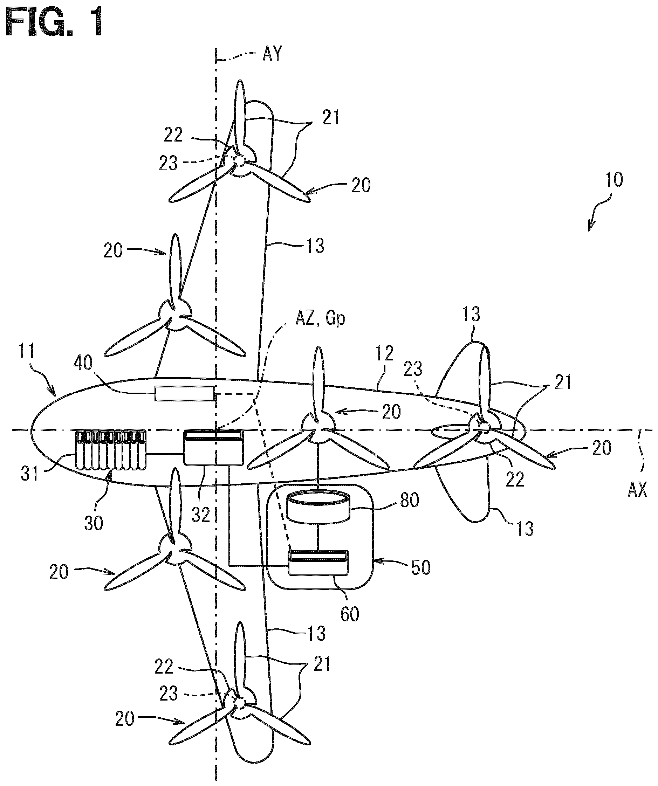

A flight system 30 shown in FIG. 1 is mounted on an eVTOL 10. The eVTOL 10 is an electric vertical take-off and landing aircraft. The electric vertical take-off and landing aircraft is an electric-powered vertical take-off and landing aircraft, and can take off and land vertically. The eVTOL is an abbreviation of an electric vertical take-off and landing aircraft. The eVTOL 10 is an electric-type aircraft flying in the atmosphere, and corresponds to an electric flight vehicle and an electric aircraft. The eVTOL 10 may be a manned flight vehicle carrying occupants or an unmanned flight vehicle carrying no occupant. The eVTOL 10 is operated by a pilot as an operator. The pilot may operate the eVTOL 10 as an occupant, or may remotely operate the eVTOL 10 without being on board the eVTOL 10. The flight system 30 is a system that drives the eVTOL 10 to fly. The flight system 30 may be referred to as a propulsion system.

The eVTOL 10 includes an airframe 11 and rotors 20. The airframe 11 includes an airframe main body 12 and wings 13. The airframe main body 12 is a body of the airframe 11 and has, for example, a shape extending in a front-rear direction. The airframe main body 12 has a passenger compartment for carrying occupants. Each of the wings 13 extends from the airframe main body 12 and multiple wings 13 are provided on the airframe main body 12. The wings 13 are fixed wings. The multiple wings 13 include a main wing, a tail wing, and the like.

In the eVTOL 10, the airframe main body 12 extends along a roll axis AX. In the eVTOL 10, the roll axis AX extends in a front-rear direction of the airframe 11, a pitch axis AY extends in a width direction of the airframe 11, and a yaw axis AZ extends in an upper-lower direction of the airframe 11. The roll axis AX, the pitch axis AY, and the yaw axis AZ are orthogonal to one another and pass through a center of gravity Gp of the airframe. The center of gravity Gp of the airframe is a center of gravity of the eVTOL 10, for example, a center of gravity of the eVTOL 10 at empty weight.

Multiple rotors 20 are provided on the airframe 11. The eVTOL 10 is a multi-transponder including at least three rotors 20. For example, at least four rotors 20 are provided on the airframe 11. The rotors 20 are provided on the airframe main body 12 and the wings 13. Each of the rotors 20 rotates about a rotor axis. The rotor axis is, for example, a center line of the rotor 20. The rotor 20 is a rotary blade, and can generate thrust and lift in the eVTOL 10. A force generated when the eVTOL 10 ascends may be referred to as thrust. The rotor 20 may be referred to as a propeller.

The rotor 20 includes blades 21, a rotor head 22, and a rotor shaft 23. The blades 21 are arranged in a circumferential direction of the rotor axis. The rotor head 22 couples the multiple blades 21. Each of the blades 21 extends from the rotor head 22 in a radial direction of the rotor axis. The blades 21 are vanes that rotate together with the rotor shaft 23. The rotor shaft 23 is a rotation shaft of the rotor 20 and extends from the rotor head 22 along the rotor axis.

Manners in which the eVTOL 10 flies include vertical take-off, vertical landing, cruise, hovering, and the like. The eVTOL 10 can take off from a take-off point by ascending in a vertical direction without sliding, for example, as the vertical take-off. The eVTOL 10 can land at a landing point without sliding by descending in the vertical direction, for example, as the vertical landing. The eVTOL 10 can fly to move in a horizontal direction, for example, as the cruise. The eVTOL 10 can fly as if stopping at a predetermined position in the air, for example, as the hovering.

The eVTOL 10 is a tilt rotor aircraft. In the eVTOL 10, the rotor 20 can be tilted. That is, a tilt angle of the rotor 20 is adjustable. For example, when the eVTOL 10 ascends, an orientation of the rotor 20 is set such that the rotor axis extends in the upper-lower direction. In this case, the rotor 20 functions as a lift-rotor for generating lift in the eVTOL 10. The lift-rotor also functions as a hovering-rotor allowing the eVTOL 10 to hover. The lift-rotor also allows the eVTOL 10 to descend. The hovering-rotor may be referred to as a hovering rotor.

When the eVTOL 10 moves forward, the orientation of the rotor 20 is set such that the rotor axis extends in the front-rear direction. In this case, the rotor 20 functions as a cruise-rotor for generating thrust in the eVTOL 10. In the present embodiment, a front of the pilot is referred to as a front of eVTOL 10. A direction in which the eVTOL 10 moves in the horizontal direction may be defined as the front regardless of the front of the pilot.

The eVTOL 10 includes a tilt mechanism that is not shown. The tilt mechanism includes a motor and the like, and is driven to adjust the tilt angle of the rotor 20. The tilt mechanism may be referred to as a tilt drive unit. For example, in the eVTOL 10, the wing 13 can be inclined relative to the airframe main body 12. That is, the rotor 20 can be tilted together with the wing 13. In the eVTOL 10, the tilt angle of the rotor 20 is adjusted by adjusting an inclination angle of the wing 13 relative to the airframe main body 12. In the eVTOL 10, a mechanism for adjusting the inclination angle of the wing 13 is the tilt mechanism.

In the eVTOL 10, the rotor 20 may be capable of tilting relative to the airframe 11. For example, the tilt angle of the rotor 20 may be adjusted by adjusting an inclination angle of the rotor 20 relative to the wing 13.

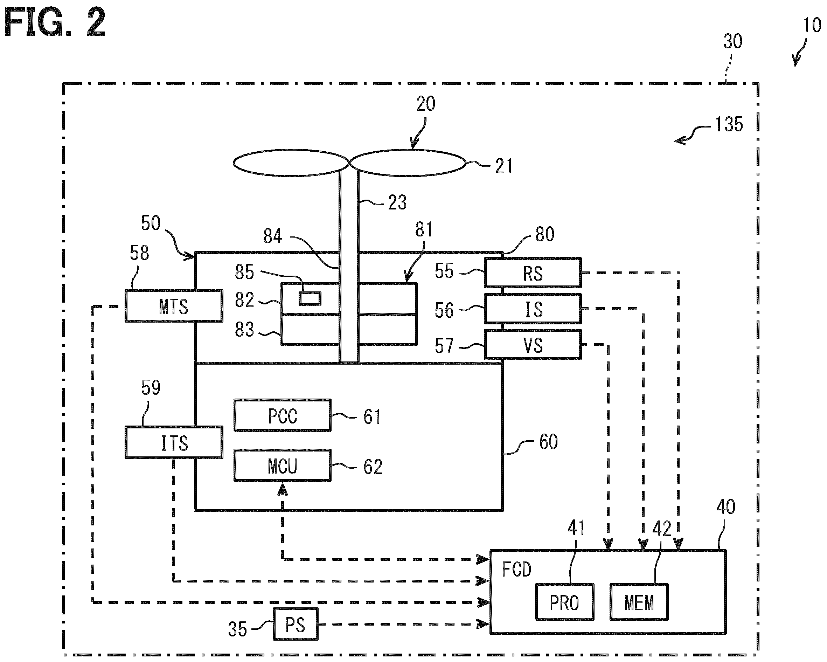

As shown in FIGS. 1 and 2, the flight system 30 includes a battery 31, a distributor 32, an attitude sensor 35, a flight control device 40, and an EPU 50. The EPU 50 includes a rotation sensor 55, a current sensor 56, a voltage sensor 57, a motor temperature sensor 58, and an inverter temperature sensor 59. The flight control device 40 includes a processor 41 and a memory 42. In FIG. 2, the attitude sensor 35 is illustrated as PS, the flight control device 40 is illustrated as FCD, the processor 41 is illustrated as PRO, and the memory 42 is illustrated as MEM. The rotation sensor 55 is illustrated as RS, the current sensor 56 is illustrated as IS, the voltage sensor 57 is illustrated as VS, the motor temperature sensor 58 is illustrated as MTS, and the inverter temperature sensor 59 is illustrated as ITS.

The EPU 50 is a device for driving the rotor 20 to rotate, and corresponds to a drive device. The EPU is an abbreviation of an electric propulsion unit. The EPU 50 may be referred to as an electric drive device. The EPU 50 is individually provided for each of the multiple rotors 20. The EPU 50 is aligned with the rotor 20 along the rotor axis. All of the multiple EPUs 50 are fixed on the airframe 11. The EPU 50 rotatably supports the rotor 20. The EPU 50 is connected to the rotor shaft 23.

The rotor 20 is fixed to the airframe 11 with the EPU 50 interposed therebetween. The EPU 50 is configured not to be inclined relative to the rotor 20. The EPU 50 can be inclined together with the rotor 20. When the tilt angle of the rotor 20 is adjusted, an orientation of the EPU 50 is set together with the rotor 20.

The EPU 50 includes a motor device 80 and an inverter device 60. The motor device 80 includes a motor 81. The EPU 50 includes one motor 81 by including one motor device 80. In the motor device 80, the motor 81 is accommodated in a motor housing. The motor 81 is a multi-phase AC motor, for example, a three-phase or six-phase AC rotary electric machine. The motor 81 is a flight driving source of the eVTOL 10 and functions as an electric motor. The motor 81 can cause the eVTOL 10 to fly by driving the rotor 20 to rotate. The motor 81 is a flight-motor causing the eVTOL 10 to fly. The motor 81 is driven by electric power of the battery 31. The EPU 50 drives the rotor 20 to rotate by driving the motor 81. As the motor 81, for example, a brushless motor is used.

The motor 81 includes a motor stator 82, a motor rotor 83, and a motor shaft 84. The motor shaft 84 is driven to rotate with respect to the motor stator 82 together with the motor rotor 83. The motor shaft 84 is connected to the rotor shaft 23 and rotates together with the rotor shaft 23. The motor device 80 can drive the rotor 20 to rotate as the motor 81 is driven to rotate. The motor rotor 83 rotates about a motor axis. The motor axis is a center line of the motor 81. In the EPU 50, the motor device 80 and the inverter device 60 are arranged along the motor axis.

The motor stator 82 includes a multi-phase coil 85. The coil 85 is formed by multiple coil portions. Each of the coil portions is formed by winding a coil wire such as an electric wire. For example, the multi-phase coil 85 is formed by arranging multiple coil portions in a circumferential direction of the motor axis. In the present embodiment, a three-phase motor is used as the motor 81, and a three-phase coil is used as the coil 85.

The inverter device 60 includes an inverter circuit 61 and a motor control unit 62. In the inverter device 60, the inverter circuit 61 and the motor control unit 62 are accommodated in an inverter housing. The inverter circuit 61 drives the motor 81 by converting electric power to be supplied to the motor 81. The inverter circuit 61 may be referred to as a drive unit. The inverter circuit 61 converts the electric power to be supplied to the motor 81 from a direct current to an alternating current. The inverter circuit 61 is a power conversion unit that converts electric power. The inverter circuit 61 is a multi-phase power conversion unit, and performs power conversion for each of the multiple phases. The inverter circuit 61 is, for example, a three-phase inverter, and may be simply referred to as an inverter. The motor 81 is driven according to the voltage and current supplied from the inverter circuit 61.

The motor control unit 62 performs motor control via the inverter circuit 61. The motor control unit 62 controls the motor 81 by controlling the inverter circuit 61. The motor control unit 62 is electrically connected to the flight control device 40, and performs the motor control in response to a signal from the flight control device 40.

The rotation sensor 55 detects a rotation speed of the motor 81 as a motor rotation speed. The rotation sensor 55 includes, for example, an encoder and a resolver. The current sensor 56 detects a current that is to flow through the motor 81 as a motor current. The current sensor 56 detects the motor current for each of the multiple phases, for example. The voltage sensor 57 detects a voltage to be input to the motor 81 as a motor voltage. The rotation sensor 55, the current sensor 56, and the voltage sensor 57 are provided in, for example, the motor device 80. The rotation sensor 55, the current sensor 56, and the voltage sensor 57 may be provided in the inverter device 60.

The motor temperature sensor 58 is provided, for example, in the motor device 80, and, as a motor temperature, detects a temperature of the motor device 80. The motor temperature sensor 58 detects, for example, a temperature of a portion inside the motor device 80 where the temperature tends to rise as the motor 81 is driven. The motor temperature sensor 58 detects a temperature of the motor stator 82 or the motor rotor 83, for example, as the portion where the temperature tends to rise.

The inverter temperature sensor 59 is provided in the inverter device 60, for example, and detects a temperature of the inverter device 60 as an inverter temperature. The inverter temperature sensor 59 detects, for example, a temperature of a portion inside the inverter device 60 where the temperature tends to rise as the inverter circuit 61 is driven. The inverter temperature sensor 59 detects a temperature of the inverter circuit 61, for example, as the portion where the temperature tends to rise.

The battery 31 is electrically connected to the multiple EPUs 50. The battery 31 is a power supplying unit that supplies electric power to the EPUs 50, and corresponds to a power supply unit. The battery 31 is a DC voltage source that applies a DC voltage to the EPUs 50. The battery 31 has a rechargeable secondary battery. Examples of the secondary battery include a lithium-ion battery and a nickel-hydrogen battery. In addition to or instead of the battery 31, a fuel cell, a generator, or the like may be used as the power supply unit. The battery 31 can store electric power and corresponds to a power storage device.

The distributor 32 is electrically connected to the battery 31 and the multiple EPUs 50. The distributor 32 distributes the electric power from the battery 31 to the multiple EPUs 50. The battery 31 is electrically connected to the multiple EPUs 50 via the distributor 32. The battery 31 supplies electric power to the EPUs 50 via the distributor 32. The distributor 32 may be omitted as long as the electric power of the battery 31 is supplied to the multiple EPUs 50. As the configuration in which the distributor 32 may be omitted, for example, there is a configuration in which a power supply unit is individually provided for each of the multiple EPUs 50.

The eVTOL 10 includes propulsion devices 135. Each of the propulsion devices 135 includes the rotor 20 and the EPU 50. The propulsion device 135 can propel the eVTOL 10 by the EPU 50 driving the rotor 20 to rotate. The propulsion device 135 is a device in which the rotor 20 and the EPU 50 are integrated.

The attitude sensor 35 detects an attitude of the eVTOL 10. The attitude of the eVTOL 10 may be referred to as an airframe attitude. When the eVTOL 10 is flying, the attitude of the eVTOL 10 may be referred to as a flight attitude. The attitude sensor 35 outputs a detection signal corresponding to the attitude of the eVTOL 10. The eVTOL 10 includes at least one of a speed sensor, a gyro sensor, and an altitude sensor as the attitude sensor 35.

The speed sensor is a velocity sensor that detects a velocity of the eVTOL 10. The speed sensor detects a velocity of the eVTOL 10 in at least one direction among a direction in which the roll axis AX extends, a direction in which the pitch axis AY extends, and a direction in which the yaw axis AZ extends. The gyro sensor is an angular velocity sensor that detects an angular velocity of the eVTOL 10. The gyro sensor detects an angular velocity of the eVTOL 10 in each of a roll direction, a pitch direction, and a yaw direction, for example. The roll direction is a circumferential direction of the roll axis AX, the pitch direction is a circumferential direction of the pitch axis AY, and the yaw direction is a circumferential direction of the yaw axis AZ. The altitude sensor is a sensor that detects an altitude of the eVTOL 10.

The sensors 35 and 55 to 59 are electrically connected to the flight control device 40. The sensors 35 and 55 to 59 output detection signals to the flight control device 40. The sensors 35 and 55 to 59 may be electrically connected to the motor control unit 62. In the configuration, the detection signals of the sensors 35 and 55 to 59 are input to the flight control device 40 via the motor control unit 62.

The flight control device 40 shown in FIG. 2 is, for example, an ECU, and performs flight control for causing the eVTOL 10 to fly. The flight control device 40 is a control device that controls the flight system 30, and controls, for example, the EPU 50. The ECU is an abbreviation of an electronic control unit. The flight control device 40 is mainly implemented by a computer. The computer includes the processor 41, the memory 42, an input/output interface, and a bus connecting these components. The flight control device 40 executes various processes such as a flight control process for performing the flight control by causing the processor 41 to execute a control program stored in the memory 42.

The processor 41 is hardware for performing an arithmetic process coupled to the memory 42. The processor 41 executes various processes such as the flight control process by accessing the memory 42. The memory 42 is a storage medium that stores the control program and the like. For example, the memory 42 is a non-transitory tangible storage medium that non-temporarily stores computer readable programs and data. The non-transitory tangible storage medium is a non-transitory tangible storage medium, and is implemented by a semi-conductor memory, a magnetic disk, or the like. The memory 42 stores, for example, the control program for performing the flight control. The control program for performing the flight control corresponds to a flight control program. The memory 42 may be referred to as a storage unit.

The flight control device 40 is electrically connected to the EPU 50. The flight control device 40 performs the flight control according to the detection results of various sensors and the like. The flight control includes EPU control for driving the EPU 50. The EPU control includes motor control for driving the motor 81. The detection results of the various sensors include the detection results of the sensors 35 and 55 to 59.

The flight control device 40 controls driving of the motor 81 and the EPU 50 such that the eVTOL 10 flies at a stable attitude. The stable attitude is an attitude in a state in which an angle of the eVTOL 10 is stabilized at a normal angle. If the angle of the eVTOL 10 is in an allowable range, the angle of the eVTOL 10 is a normal angle. Examples of the angle of eVTOL 10 include an angle in the roll direction, an angle in the pitch direction, and an angle in the yaw direction. If each of the angle in the roll direction, the angle in the pitch direction, and the angle in the yaw direction is in the allowable range, the angle of the eVTOL 10 is a normal angle. At the stable attitude, a change in the angle of the eVTOL 10 is in an allowable range. The change in the angle is indicated by an angular velocity, for example. At the stable attitude, each of the angular velocity in the roll direction, the angular velocity in the pitch direction, and the angular velocity in the yaw direction in the eVTOL 10 is in the allowable range.

The attitude of the eVTOL 10 includes a normal attitude in which the attitude of the eVTOL 10 is normal and an abnormal attitude in which the attitude of the eVTOL 10 is not normal. The stable attitude is included in the normal attitude. When the attitude of the eVTOL 10 is stable, the eVTOL 10 is at the stable attitude. When the attitude of the eVTOL 10 is not stable, the eVTOL 10 is not at the stable attitude. In this case, the eVTOL 10 is at the abnormal attitude, for example.

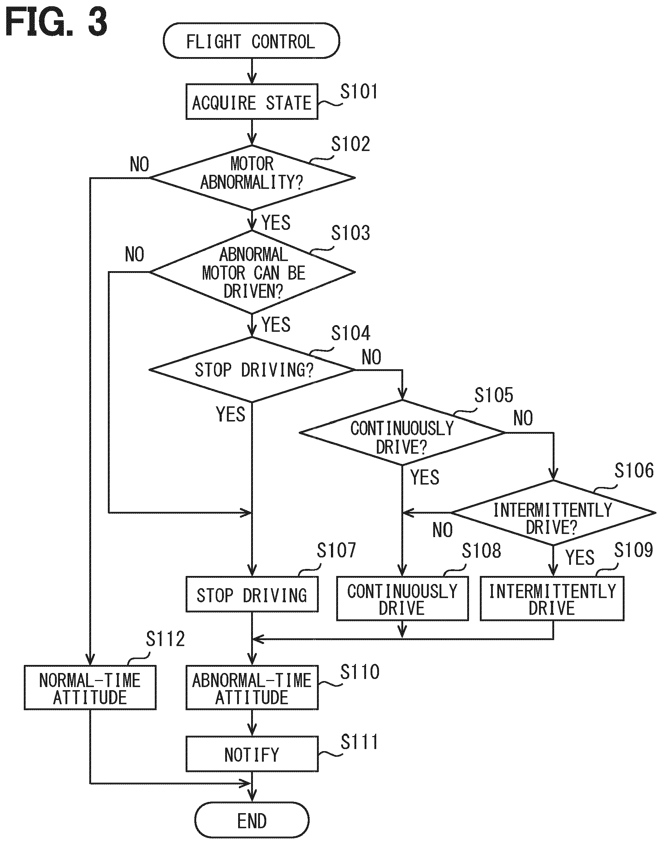

The flight control in the eVTOL 10 will be described with reference to a flowchart of FIG. 3. The flight control device 40 repeatedly executes the flight control process at a predetermined control cycle. The flight control device 40 has a function of executing a process in each step of the flight control process. A control method to be executed by the flight control process corresponds to a flight control method.

In step S101 shown in FIG. 3, the flight control device 40 acquires a state of the motor 81 as a motor state. The flight control device 40 acquires the motor states of all the motors 81. The flight control device 40 acquires the motor state using the detection signals of the sensors 55 to 59 and the like. The motor state is a driving state of the motor 81, for example, a motor output. The motor output is an output of the motor 81, and is, for example, a workload, a torque, or a rotation speed of the motor 81. The motor output is calculated using at least one of the motor rotation speed, the motor current, the motor voltage, and the motor temperature. The motor output is a detection value calculated using the detection signals of the sensors 55 to 58 and the like. The motor output is a detection value at each time and is, for example, an instantaneous value. The motor 81 generates thrust and lift corresponding to the motor output. The electric power to be supplied to the motor 81 is electric power for generating the thrust and the lift in the motor 81.

The flight control device 40 acquires an EPU state by acquiring the motor state. The EPU state is a driving state of the EPU 50, and is, for example, an EPU output. The EPU output is determined by the motor output. In the present embodiment, since one EPU 50 includes one motor 81, the EPU output is the motor output.

In step S102, the flight control device 40 determines whether a motor abnormality occurs. The flight control device 40 determines whether a motor abnormality occurs for all of the motors 81. In the determination, for example, the motor state is used. The motor abnormality is an abnormality of the motor device 80. The motor abnormality includes an abnormality of the motor 81. Examples of the motor abnormality include excess or deficiency of the motor output and a high temperature abnormality of the motor temperature. The flight control device 40 determines, for example, whether the motor output at a predetermined timing is excessively large, and whether the motor output at a predetermined timing is excessively small. For example, when the motor output at a predetermined timing is larger than an allowable range, the flight control device 40 determines that the motor output is excessively large and a motor abnormality occurs. When the motor output at a predetermined timing is smaller than an allowable range, the flight control device 40 determines that the motor output is excessively small and a motor abnormality occurs. When the motor temperature at a predetermined timing is higher than an allowable range, the flight control device 40 determines that the motor temperature is high and a motor abnormality occurs. When the motor abnormality occurs, the flight control device 40 acquires a position, the number, and the like of the motor 81 in which the abnormality occurs.

Causes of the motor abnormality include a physical abnormality, a mechanical abnormality, an abnormality in the control system, and an abnormality in the power supply system, which occur in the motor device 80, the inverter device 60, and the like. When the motor abnormality occurs, the airframe attitude of the eVTOL 10 may be unstable due to the presence of an abnormal motor and an abnormal EPU. The abnormal motor is a motor 81 in which an abnormality occurs. The abnormal EPU is an EPU 50 including an abnormal motor. When an output of the abnormal motor at a predetermined timing is excessively large, the rotor 20 driven to rotate by the abnormal motor may excessively rotate to generate excessive thrust or excessive lift. When the output of the abnormal motor is excessively large in this way, the airframe attitude tends to be unstable. On the other hand, when the output of the abnormal motor at a predetermined timing is excessively small, the rotation of the rotor 20 driven to rotate by the abnormal motor may be insufficient, and the thrust and the lift may be insufficient. When a temperature of the abnormal motor at a predetermined timing is higher than the allowable range, it is difficult to continuously drive the abnormal motor, and it may be necessary to limit the output of the abnormal motor. When the output of the abnormal motor is limited, the output of the abnormal motor is excessively small, and the thrust and the lift may be insufficient. When the output of the abnormal motor is insufficient as described above, the airframe attitude tends to be unstable.

When no motor abnormality occurs, the flight control device 40 proceeds to step S112 and performs a normal-time attitude process. In the normal-time attitude process, the outputs of the normal motor and the normal EPU are adjusted such that the flight attitude of the eVTOL 10 is the stable attitude. The normal motor is a motor 81 in which no abnormality occurs. The normal EPU is an EPU 50 that does not include an abnormal motor. In the normal-time attitude process, the outputs of the normal motors are adjusted assuming that all of the motors 81 mounted in the eVTOL 10 are normal motors.

The normal-time attitude process includes an output setting process and an output adjustment process. In the output setting process, a total output necessary for causing the eVTOL 10 to fly and an individual output necessary for maintaining the eVTOL 10 at the stable attitude are calculated. The total output is a sum of required outputs required for all of the motors 81 regarding the outputs generated by all of the motors 81. The individual output is a required output individually required for each of the motors 81 regarding the output generated by each of the motors 81. The flight control device 40 issues an output request to the motor 81 by outputting a command signal to the motor 81. The required output is calculated according to a manner in which an operation unit is operated. The operation unit is an operation target such as an operation lever to be operated by the pilot.

In the output adjustment process, a target output is set for each of all the motors 81 such that all the motors 81 generate the individual outputs. In the output adjustment process, the output is adjusted for each of all the motors 81 such that the motor output is the target output. In the output adjustment process, for example, a torque or a current is set as the target output.

When there is at least one motor 81 in which an abnormality occurs, the flight control device 40 determines that a motor abnormality occurs, and proceeds to step S103. In step S103, the flight control device 40 determines whether the abnormal motor can be driven. The flight control device 40 determines, for example, whether power supply to the abnormal motor is possible, whether the abnormal motor can withstand driving, and the like. The flight control device 40 determines whether a secondary abnormality occurs with the driving of the abnormal motor, for example. When the output of the abnormal motor is excessively large, the output of the abnormal motor may be further increased as the secondary abnormality. When the temperature of the abnormal motor is high, the temperature of the abnormal motor may further increase as the secondary abnormality. The determination as to whether the secondary abnormality occurs is performed using the detection signals of the sensors 55 to 59 and the like.

When the abnormal motor cannot be driven, the flight control device 40 proceeds to step S107 and performs a driving stop process. In the driving stop process, a process for stopping the driving of the abnormal motor is performed. In the driving stop process, for example, the driving of the abnormal motor is stopped by stopping the power supply to the abnormal motor.

After step S107, in step S110, the flight control device 40 performs abnormal-time attitude process. In the abnormal-time attitude process, the output of the normal motor is adjusted such that the eVTOL 10 is maintained at the stable attitude in a state in which the driving of the abnormal motor is stopped. For example, when an abnormal motor is present on a right wing side of the eVTOL 10, the flight control device 40 increases the output of the normal motor remaining on the right wing side. In this case, the flight control device 40 can balance the outputs on the right wing side and a left wing side of the eVTOL 10. Therefore, even if the driving of the abnormal motor is stopped, the eVTOL 10 tends to be at the stable attitude.

In step S111, the flight control device 40 performs a notification process. The flight control device 40 issues an abnormality notification for notifying the occurrence of the motor abnormality as the notification process. In the notification process, the occurrence of a motor abnormality is notified to the pilot or the like. In the notification process, abnormal motor information related to the abnormal motor is notified. Examples of the abnormal motor information include information indicating a position and the number of abnormal motors in the eVTOL 10. Examples of the abnormal motor information include information indicating stop of the driving of the abnormal motor, information indicating continuation of the driving of the abnormal motor, and information indicating the output of the abnormal motor. In the notification process, the occurrence of the motor abnormality is notified by sound, an image, or the like.

In the notification process, attitude information related to the attitude of the eVTOL 10 may be notified. Examples of the attitude information include information indicating that the eVTOL 10 is maintained at the stable attitude and information indicating that the eVTOL 10 is not at a stable attitude.

When the abnormal motor can be driven, the flight control device 40 determines whether the eVTOL 10 is capable of maintaining the stable attitude in steps S104 to S106. A function of executing the processes in steps S104 to S106 in the flight control device 40 corresponds to a maintaining determination unit. When the eVTOL 10 is capable of maintaining the stable attitude, the flight control device 40 adjusts, in steps S107 to S110, the output of at least one of the normal motor and the abnormal motor so as to maintain the eVTOL 10 at the stable attitude. A function of executing the processes in steps S107 to S109 in the flight control device 40 corresponds to an output adjustment unit.

In step S104, the flight control device 40 determines whether to stop driving of the abnormal motor. In the determination, it is determined whether the eVTOL 10 is capable of maintaining the stable attitude even if the driving of the abnormal motor is stopped. The flight control device 40 assumes that the driving of the abnormal motor is stopped, and determines whether the eVTOL 10 can be maintained at the stable attitude using normal motor information, the abnormal motor information, and the like. Examples of the normal motor information include information indicating a driving state, information indicating magnitude of a current output, and a maximum output that can be output for all of the normal motors. For example, when an abnormal motor is present on the right wing side of the eVTOL 10, the flight control device 40 assumes that the driving of the abnormal motor is stopped, and determines whether the eVTOL 10 can be maintained at the stable attitude by increasing the output of the normal motor on the right wing side. A function of executing the process in step S104 in the flight control device 40 corresponds to a stop determination unit.

When the eVTOL 10 is capable of maintaining the stable attitude even if the driving of the abnormal motor is stopped, the flight control device 40 determines to stop the driving of the abnormal motor, and proceeds to step S107. In this case, the flight control device 40 performs the driving stop process in step S107 as in the case where the abnormal motor cannot be driven. A function of executing the process in step S107 in the flight control device 40 corresponds to a driving stop unit. After step S107, the flight control device 40 performs the processes in steps S110 and S111.

In a case where the eVTOL 10 is not capable of maintaining the stable attitude when the driving of the abnormal motor is stopped, the flight control device 40 determines not to stop the driving of the abnormal motor in step S104. When it is determined not to stop the driving of the abnormal motor, the flight control device 40 determines in steps S105 and S106 whether the eVTOL 10 is capable of maintaining the stable attitude even if the driving of the abnormal motor is continued. A function of executing the processes in steps S105 and S106 in the flight control device 40 corresponds to a continuation determination unit. When it is determined not to stop the driving of the abnormal motor, the flight control device 40 continues the driving of the abnormal motor in steps S108 and S109. A function of executing the processes in steps S108 and S109 in the flight control device 40 corresponds to a driving continuation unit.

In step S105, the flight control device 40 determines whether to continuously drive the abnormal motor. In the determination, it is determined whether the eVTOL 10 is capable of maintaining the stable attitude when the abnormal motor is continuously driven. The continuous driving means that the driving of the abnormal motor is continuously continued. The flight control device 40 assumes that the abnormal motor is continuously driven, and determines whether the eVTOL 10 can be maintained at the stable attitude using the abnormal motor information, the normal motor information, and the like. For example, when the abnormal motor is present on the right wing side of the eVTOL 10, the flight control device 40 assumes that the abnormal motor is continuously driven, and determines whether the eVTOL 10 can be maintained at the stable attitude by increasing or decreasing the output of the normal motor on the right wing side.

When it is determined to continuously drive the abnormal motor, the flight control device 40 proceeds to step S108 and performs a continuous driving process. In the continuous driving process, a process for continuously driving the abnormal motor is performed. In the continuous driving process, for example, the abnormal motor is continuously driven by continuously supplying electric power to the abnormal motor. A function of executing the process in step S108 in the flight control device 40 corresponds to a continuous driving unit. After step S108, the flight control device 40 performs the processes in steps S110 and S111 as in the case where the driving of the abnormal motor is stopped.

When it is determined not to continuously drive the abnormal motor, the flight control device 40 determines that the eVTOL 10 cannot be maintained at the stable attitude even if the abnormal motor is continuously driven, and proceeds to step S106. In step S106, the flight control device 40 determines whether to intermittently drive the abnormal motor. In the determination, it is determined whether the eVTOL 10 is capable of maintaining the stable attitude when the abnormal motor is intermittently driven. The intermittent driving means that the abnormal motor is intermittently driven. In the intermittent driving, the abnormal motor is repeatedly driven and stopped at a predetermined cycle. Examples of the case where the eVTOL 10 cannot be maintained at the stable attitude even if the abnormal motor is continuously driven include a case where the output of the abnormal motor is excessively large or a case where the output of the abnormal motor is excessively small. The flight control device 40 determines whether the output of the abnormal motor at a predetermined timing is excessively large, and determines to intermittently drive the abnormal motor when the output of the abnormal motor is excessively large. A function of executing the process in step S106 in the flight control device 40 corresponds to an excessively-large-output determination unit.

For example, when the abnormal motor is present on the right wing side of the eVTOL 10, the flight control device 40 assumes that the abnormal motor is intermittently driven, and determines whether the eVTOL 10 can be maintained at the stable attitude by increasing or decreasing the output of the normal motor on the right wing side.

When it is determined not to intermittently drive the abnormal motor, the flight control device 40 determines that the output of the abnormal motor is not excessively large, and proceeds to step S108 to perform the continuous driving process. In this case, even if the output of the abnormal motor that is continuously driven is excessively small, the output of the abnormal motor can be utilized to maintain the eVTOL 10 at the stable attitude. After step S108, the flight control device 40 proceeds to step S110 and performs the abnormal-time attitude process. The flight control device 40 adjusts the output of the normal motor so as to maintain the eVTOL 10 at the stable attitude by utilizing the output of the abnormal motor that is continuously driven in the abnormal-time attitude process.

When it is determined to intermittently drive the abnormal motor, the flight control device 40 determines that the output of the abnormal motor is excessively large and proceeds to step S109 to perform an intermittent driving process. In the intermittent driving process, a process for intermittently driving the abnormal motor is performed. In the intermittent driving process, for example, the abnormal motor is intermittently driven by intermittently supplying electric power to the abnormal motor. When the abnormal motor is intermittently driven, an average output of the abnormal motor per unit time is smaller than when the abnormal motor is continuously driven. The flight control device 40 performs the intermittent driving process to decrease the output of the abnormal motor as compared with the case where the continuous driving process is performed. A function of executing the process in step S109 in the flight control device 40 corresponds to a decrease continuation unit.

After step S109, the flight control device 40 proceeds to step S110 and performs the abnormal-time attitude process. The flight control device 40 adjusts the output of the normal motor so as to maintain the eVTOL 10 at the stable attitude by utilizing the output of the abnormal motor that is intermittently driven in the abnormal-time attitude process.

The attitude maintaining of the eVTOL 10 by the abnormal motor and the normal motor will be collectively described. In the eVTOL 10, even if at least one motor 81 becomes an abnormal motor, the driving of the abnormal motor and the driving of the normal motor are individually controlled, and thus the motor output necessary for maintaining the airframe attitude can be secured. For example, in a case where the airframe attitude cannot be maintained even by adjusting the output of the normal motor when the abnormal motor is stopped, the power supply to the abnormal motor is continued to maintain the airframe attitude. On the other hand, when the airframe attitude can be maintained at the stable attitude by stopping the abnormal motor and adjusting the output of the normal motor, the power supply to the abnormal motor is stopped to maintain the airframe attitude. In a case where the airframe attitude cannot be maintained due to excessively large output when the abnormal motor is continuously energized as during a normal time, the energization of the abnormal motor is periodically stopped and restarted. By adjusting an average motor output generated by the abnormal motor by repeating the energization stop and the energization restart, the airframe attitude can be stabilized.

In a case where an abnormality occurs in the motor 81, when a secondary abnormality may occur if the driving of the abnormal motor is continued, the driving of the abnormal motor is stopped regardless of whether the airframe can be maintained. In particular, when the abnormality of the motor 81 is an excessively large output abnormality, since a rotation speed, a current, a temperature, and the like of the abnormal motor become excessively large, a risk that a secondary abnormality occurs tends to be high. Examples of the secondary abnormality include not only an abnormality of the abnormal motor but also occurrence of an abnormality in other portions of the eVTOL 10 occurring due to the abnormality of the abnormal motor.

Over-rotation of the abnormal motor is in an abnormal state. Therefore, as long as the airframe attitude can be maintained even if the driving of the abnormal motor is stopped, it is preferable to stop the driving of the abnormal motor. However, when stability of the airframe attitude cannot be maintained by stopping the driving of the abnormal motor, the power supply to the abnormal motor is continued in a safe range. The memory 42 or the like may store in advance a program or the like for determining whether the airframe attitude can be maintained when an abnormality such as a failure occurs in each of the multiple motors 81. When the driving of the abnormal motor is stopped, the power supply to the abnormal motor may be restarted under a condition that a sign that the airframe attitude is unstable is detected.

When an over-rotation abnormality of the abnormal motor occurs, the flight control device 40 cannot perform normal output control, and an excessive output is generated by driving the abnormal motor. Therefore, when the power supply to the abnormal motor is continuously performed as during a normal time, the output of the abnormal motor is too large, and the airframe attitude may not be able to be stabilized only by adjusting the output of the other normal motors. In this case, it is preferable to forcibly decrease an average value of the output by repeatedly turning on and off the power supply to the abnormal motor, thereby stabilizing the airframe attitude as much as possible.

In an aircraft provided with multiple flight-motors, when an output abnormality occurs in a part of the flight-motors, it is necessary to adjust outputs of the remaining flight-motors in order to stabilize the airframe attitude. Therefore, when an abnormality occurs in the flight-motor, it is not realistic for the pilot to manually perform an operation of adjusting the outputs of all the remaining flight-motors. Therefore, when an abnormality occurs in the flight-motor, it is preferable to automatically perform control for stabilizing the airframe attitude.

According to the present embodiment described above, when an abnormality occurs in the motor 81, it is determined whether the eVTOL 10 is capable of maintaining the stable attitude for at least one of a state in which the driving of the abnormal motor is stopped and a state in which the driving of the abnormal motor is continued. Therefore, even if the driving of the abnormal motor is not actually stopped or continued, the attitude of the eVTOL 10 can be estimated. When it is determined that the eVTOL 10 is capable of maintaining the stable attitude, the output of at least one of the abnormal motor and the normal motor is adjusted to maintain the eVTOL 10 at the stable attitude. Therefore, even if the driving of the abnormal motor is actually stopped or continued, the flight attitude of the eVTOL 10 can be maintained at the stable attitude by the abnormal motor and the normal motor. Accordingly, the safety of the eVTOL 10 can be enhanced when an abnormality occurs in the motor 81.

According to the present embodiment, when the eVTOL 10 is not capable of maintaining the stable attitude in the state in which the driving of the abnormal motor is stopped, the driving of the abnormal motor is continued. In the configuration, within a range in which a secondary abnormality accompanying the driving of the abnormal motor does not occur, the driving of the abnormal motor can be utilized in order to maintain the eVTOL 10 at the stable attitude. Therefore, a decrease in the safety of the eVTOL 10 due to the abnormal motor can be reduced by driving the abnormal motor.

According to the present embodiment, when the eVTOL 10 is not capable of maintaining the stable attitude in the state in which the driving of the abnormal motor is stopped and the output of the abnormal motor is excessively large, the driving of the abnormal motor is continued such that the output of the abnormal motor decreases. In the configuration, occurrence of a secondary abnormality due to an excessively large output of the abnormal motor can be reduced by decreasing the output of the abnormal motor. Therefore, the driving of the abnormal motor can be utilized in order to maintain the eVTOL 10 at the stable attitude while reducing the occurrence of a secondary abnormality accompanying the driving of the abnormal motor.

According to the present embodiment, the output of the abnormal motor is decreased by intermittently continuing the driving of the abnormal motor. In the configuration, since the driving of the abnormal motor is intermittently continued, the average output of the abnormal motor is smaller than when the driving of the abnormal motor is continuously continued. Therefore, for example, even in a case where an abnormal mode of the abnormal motor is a mode in which an instantaneous value of the output cannot be reduced, the output of the abnormal motor can be substantially decreased as long as the abnormal motor can be driven and stopped. Accordingly, even if it is difficult to maintain the eVTOL 10 at the stable attitude due to an excessively large output of the abnormal motor, the eVTOL 10 can be maintained at the stable attitude by substantially decreasing the output of the abnormal motor. In this way, a decrease in the safety of the eVTOL 10 can be reduced by intermittently continuing the driving of the abnormal motor.

When the output of the abnormal motor is not excessively large, the output of the abnormal motor is excessively small, and the output of the abnormal motor is insufficient to maintain the eVTOL 10 at the stable attitude. Meanwhile, according to the present embodiment, when the eVTOL 10 is not capable of maintaining the stable attitude in the state in which the driving of the abnormal motor is stopped and the output of the abnormal motor is not excessive, the driving of the abnormal motor is continuously continued. Accordingly, even if the eVTOL 10 is not capable of maintaining the stable attitude due to the output of the abnormal motor being excessively small, the eVTOL 10 can be brought close to the stable attitude by utilizing the output of the abnormal motor.

According to the present embodiment, when the eVTOL 10 is capable of maintaining the stable attitude in the state in which the driving of the abnormal motor is stopped, the driving of the abnormal motor is stopped. In the configuration, the eVTOL 10 can be maintained at the stable attitude by driving of the normal motor, while avoiding the occurrence of a secondary abnormality caused by continuation of the driving of the abnormal motor.

According to the present embodiment, it is determined whether the eVTOL 10 is capable of maintaining the stable attitude in both the state in which the driving of the abnormal motor is stopped and the state in which the driving of the abnormal motor is continued. Therefore, even if the driving of the abnormal motor is not actually stopped, the attitude of the eVTOL 10 can be estimated on an assumption that the driving of the abnormal motor is stopped. Similarly, even if the driving of the abnormal motor is not actually continued, the attitude of the eVTOL 10 can be estimated on an assumption that the driving of the abnormal motor is continued. Accordingly, regardless of whether the driving of the abnormal motor is stopped or continued, the flight attitude of the eVTOL 10 can be maintained at the stable attitude by the abnormal motor and the normal motor.

### <Second Embodiment>

In a second embodiment, in the notification process to be executed when the motor abnormality occurs, an evacuation request for the eVTOL 10 is issued to the pilot in addition to the abnormality notification. Configurations, operations, and effects not particularly described in the second embodiment are the same as those in the first embodiment described above. In the second embodiment, differences from the first embodiment will be mainly described.

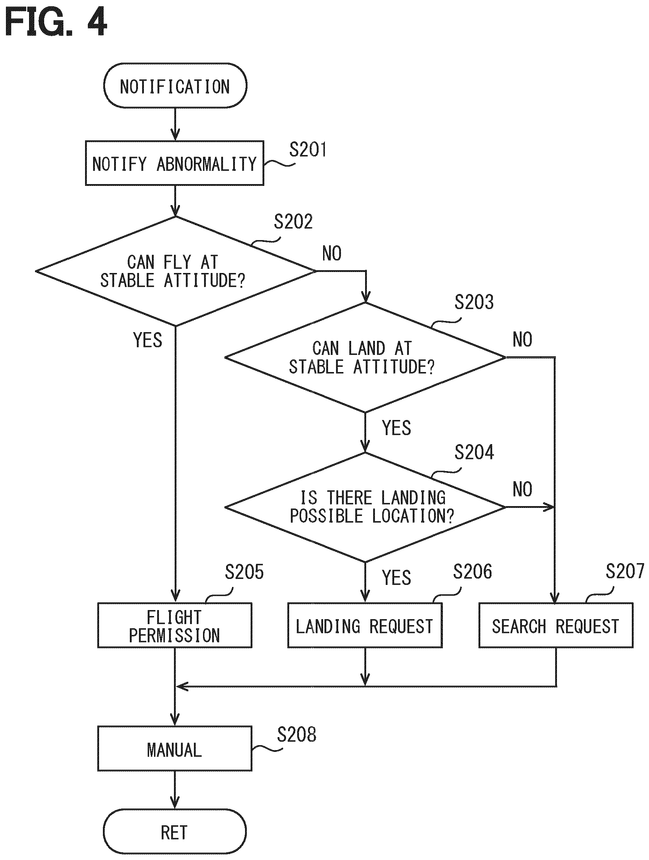

In the present embodiment, the flight control device 40 performs a request process for requesting the pilot to evacuate the eVTOL 10 in step S111 of the first embodiment. The notification process performed by the flight control device 40 in step S111 will be described with reference to a flowchart of FIG. 4.

In step S201 shown in FIG. 4, the flight control device 40 performs an abnormality notification process. In the abnormality notification process, the flight control device 40 notifies the occurrence of the motor abnormality as in step S111 of the first embodiment. In the abnormality notification process, the attitude information of the eVTOL 10 may be notified.

In step S202, the flight control device 40 performs a flight determination as to whether the eVTOL 10 can fly at the stable attitude. In the flight determination, it is determined whether the cruise is possible while maintaining the eVTOL 10 at the stable attitude. Examples of the flight manners in the case where the eVTOL 10 is capable of maintaining the stable attitude include cruise, hovering, and vertical landing. When a motor abnormality occurs, in order to maintain the eVTOL 10 at the stable attitude, for example, a situation may occur in which the cruise is possible, but the vertical landing is not possible. In the flight determination, a fact that the cruise is possible while maintaining the eVTOL 10 at the stable attitude is assumed to be that the eVTOL 10 can fly at the stable attitude.

The flight control device 40 performs the flight determination after the abnormal-time attitude process in step S110. That is, the flight determination is performed in a state in which the output adjustment of the motor 81 for maintaining the eVTOL 10 at the stable attitude is performed. When the cruise is possible while maintaining the eVTOL 10 at the stable attitude, the flight control device 40 determines that the eVTOL 10 can fly at the stable attitude, and proceeds to step S205.

In step S205, the flight control device 40 performs a flight permission process. In the flight permission process, a flight continuation permission for permitting continuation of the flight of the eVTOL 10 is notified. The flight continuation permission is notified to the pilot or the like. Examples of information notified by the flight permission process include that the eVTOL 10 can fly at the stable attitude by adjusting the output of the motor 81. In the flight permission process, the flight continuation permission is notified by sound and an image.

After step S205, the flight control device 40 proceeds to step S208 and performs a manual process. The manual process is a process for allowing the pilot to operate the eVTOL 10. For example, when the operation of the eVTOL 10 is automatically set, the operation of the eVTOL 10 is manually switched from automatic to manual by the manual process. In the manual process, at least one operation for causing the eVTOL 10 to fly is switched from automatic to manual. In the manual process, for example, an operation for changing a traveling direction of the eVTOL 10 is switched from automatic to manual. The "automatic" means that the operation of the eVTOL 10 is performed by the flight control device 40. The operation for maintaining the eVTOL 10 at the normal attitude is not switched from automatic to manual. The operation for maintaining the eVTOL 10 at the normal attitude includes at least the operation performed by the processes in steps S102 to S110.

When the eVTOL 10 cannot fly while being maintained at the stable attitude, the flight control device 40 performs a process for evacuating the eVTOL 10 in steps S203, S204, S206, and S207. In steps S203 and S204, the flight control device 40 performs a process of determining an evacuation method for evacuating the eVTOL 10. In steps S206 and S207, the flight control device 40 performs a process of requesting to evacuate the eVTOL 10. In the process, a process for requesting the pilot or the like to evacuate the eVTOL 10 is performed. A function of executing the process in steps S206 and S207 in the flight control device 40 corresponds to an evacuation request unit.

When the cruise is not possible while maintaining the eVTOL 10 at the stable attitude, the flight control device 40 proceeds to step S203. In step S203, the flight control device 40 determines whether the eVTOL 10 can land at the stable attitude. In the determination, it is determined whether vertical landing is possible while maintaining the eVTOL 10 at the stable attitude.

If the vertical landing is possible while maintaining the eVTOL 10 at the stable attitude, the flight control device 40 determines that the eVTOL 10 can land at the stable attitude, and proceeds to step S204. In step S204, the flight control device 40 determines whether there is a landing possible location below the eVTOL 10. Examples of the landing possible location include a formal landing strip and an informal landing strip. The formal landing strip is, for example, a landing strip recognized by a country or a local government. The informal landing strip is, for example, a landing strip that is not recognized by the country or the local government.

When there is a landing possible location below the eVTOL 10, the flight control device 40 proceeds to step S206 and performs a landing request process. In the landing request process, a landing request for the eVTOL 10 to land at a landing possible location below the eVTOL 10 is issued. In the landing request process, a landing request is notified to the pilot or the like as the evacuation request. In the landing request process, the landing request is notified by sound and an image. Examples of information notified by the landing request include that there is a landing possible location below the eVTOL 10, and that the eVTOL 10 can vertically land at the stable attitude. In the landing request process, it is selected to immediately land the eVTOL 10 as the evacuation of the eVTOL 10 accompanying the occurrence of an abnormality. A function of executing the process in step S206 in the flight control device 40 corresponds to a landing request unit. After step S206, the flight control device 40 proceeds to step S208 and performs the manual process.

When the eVTOL 10 can land at the stable attitude but there is no landing possible location below the eVTOL 10, the flight control device 40 proceeds to step S207 and performs a search request process. In the search request process, a search request for searching for a landing possible location is issued. In the search request process, a search request is notified to the pilot or the like as the evacuation request. In the search request process, the search request is notified by sound and an image. Examples of information notified by the search request include that there is no landing possible location below the eVTOL 10 and that the eVTOL 10 can vertically land at the stable attitude. In the search request process, when a landing possible location is found by the search, a process for requesting the eVTOL 10 to move to above the landing possible location is performed. In the search request process, it is selected to move the eVTOL 10 to the landing possible location and land the eVTOL 10 as the evacuation of the eVTOL 10 accompanying the occurrence of an abnormality. A function of executing the process in step S207 in the flight control device 40 corresponds to a search request unit.

After step S207, the flight control device 40 proceeds to step S208 and performs the manual process. When a landing possible location is found by the search, the pilot manually performs an operation for landing the eVTOL 10, which is maintained at the stable attitude, on the landing possible location.

When the eVTOL 10 cannot land at the stable attitude, the flight control device 40 proceeds to step S207 and performs the search request process. In the search request process, it is notified that the eVTOL 10 is not capable of maintaining the stable attitude when the eVTOL 10 vertically lands. In a case where the eVTOL 10 cannot land at the stable attitude, when the manual process is performed in step S208, the pilot manually performs an operation for the eVTOL 10, which is not capable of maintaining the stable attitude, to land at the landing possible location.

The request process when the motor abnormality occurs will be described collectively. It is desirable that the eVTOL 10 in which an abnormality occurs quickly lands at a safe place. In particular, when the eVTOL 10 cannot normally fly at the stable attitude, it is preferable that the eVTOL 10 lands as early as possible. If the eVTOL 10 is at a situation in which the vertical landing is possible, the vertical landing is a quickest landing method. On the other hand, in a case where the eVTOL 10 is at a situation in which the vertical landing is not possible, occurrence of an abnormal situation can be reduced by instructing the pilot to search for a place where landing can be performed safely. Examples of the case where the eVTOL 10 cannot vertically land include a case where the vertical landing is difficult in a state in which the eVTOL 10 is maintained at the stable attitude, and a case where the eVTOL 10 is flying in a place where landing is not possible, such as a steep slope or a residential district. Examples of the abnormal situation include continuing the flight of the eVTOL 10 at the abnormal attitude and vertically landing the eVTOL 10 at an unstable attitude.

However, it is preferable that the final determination is left to determination of the pilot. Therefore, when a motor abnormality occurs in the eVTOL 10, it is preferable that the airframe attitude is maintained by automatic control, and the operation for landing and flight is left to the pilot.

According to the present embodiment, when the eVTOL 10 cannot fly while being maintained at the stable attitude even if the output of at least one of the abnormal motor and the normal motor is adjusted, the eVTOL 10 is requested to evacuate. In the configuration, when the eVTOL 10 cannot fly at the stable attitude, the pilot can immediately perform an operation for evacuation such as landing of the eVTOL 10. Therefore, it is possible to avoid a situation in which the safety of the eVTOL 10 decreases due to continuation of a situation in which the eVTOL 10 cannot fly at the stable attitude.

According to the present embodiment, when there is a landing possible location below the eVTOL 10 and the eVTOL 10 is capable of maintaining the stable attitude when the eVTOL 10 vertically lands, the eVTOL 10 is required to vertically land at the landing possible location. In this case, the pilot can immediately perform an operation for the eVTOL 10 to vertically land at the landing possible location. By causing the eVTOL 10 to land at the landing possible location, the pilot can solve a situation in which the eVTOL 10 cannot fly at a safe attitude.

According to the present embodiment, when there is no landing possible location below the eVTOL 10, or when the eVTOL 10 is not capable of maintaining the stable attitude when the eVTOL 10 vertically lands, it is required to search for a landing possible location. In this case, the pilot can immediately perform an operation for searching for a landing possible location. By knowing the result of searching for the landing possible location, the pilot can easily get out of a situation in which the eVTOL 10 cannot land at the stable attitude.

### <Third Embodiment>

In the first embodiment, regardless of whether the driving of the abnormal motor is stopped or continued, the abnormal-time attitude process is performed in step S110. Meanwhile, in a third embodiment, different processes are performed according to a driving mode of the abnormal motor. Configurations, operations, and effects not particularly described in the third embodiment are the same as those of the first and second embodiments. In the third embodiment, differences from the first and second embodiments will be mainly described.

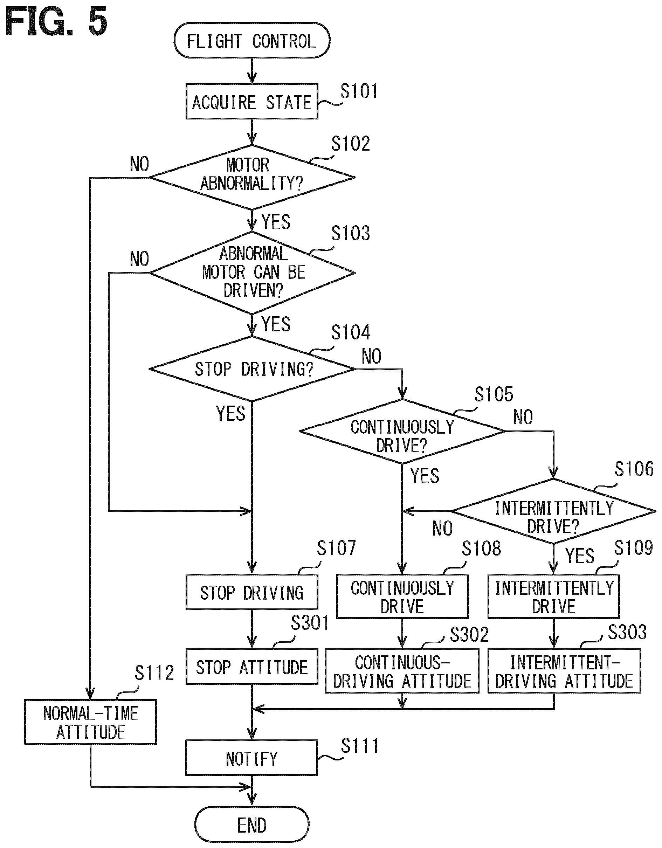

The flight control process performed by the flight control device 40 will be described with reference to a flowchart of FIG. 5. In the present embodiment, steps S301, S302, and S303 are performed instead of step S110 of the first embodiment. A function of executing processes in steps S301, S302, and S303 in the flight control device 40 corresponds to the output adjustment unit. In the flight control device 40, the function of executing step S110 includes the function of executing the processes in steps S301, S302, and S303.

After performing the driving stop process in step S107, the flight control device 40 proceeds to step S301 and performs a stop attitude process. In the stop attitude process, the output of the normal motor is adjusted such that the eVTOL 10 is maintained at the stable attitude in the state in which the driving of the abnormal motor is stopped. The stop attitude process is a process performed in conjunction with the driving stop process in order to maintain the eVTOL 10 at the stable attitude.

After performing the continuous driving process in step S108, the flight control device 40 proceeds to step S302 and performs a continuous-driving attitude process. In the continuous-driving attitude process, the output of the normal motor is adjusted such that the eVTOL 10 is maintained at the stable attitude in a state in which the driving of the abnormal motor is continuously continued. The continuous-driving attitude process is a process performed in conjunction with the continuous driving process in order to maintain the eVTOL 10 at the stable attitude.

After performing the intermittent driving process in step S109, the flight control device 40 proceeds to step S303 to perform the intermittent-driving attitude process. In the intermittent-driving attitude process, the output of the normal motor is adjusted such that the eVTOL 10 is maintained at the stable attitude in a state in which the driving of the abnormal motor is intermittently continued. The intermittent-driving attitude process is a process performed in conjunction with the intermittent driving process in order to maintain the eVTOL 10 at the stable attitude.

### <Fourth Embodiment>

In the first embodiment, the EPU 50 includes one rotor 81. Meanwhile, in a fourth embodiment, the EPU 50 includes multiple motors 81. Configurations, operations, and effects not particularly described in the fourth embodiment are the same as those in the first embodiment. In the fourth embodiment, differences from the first embodiment will be mainly described.

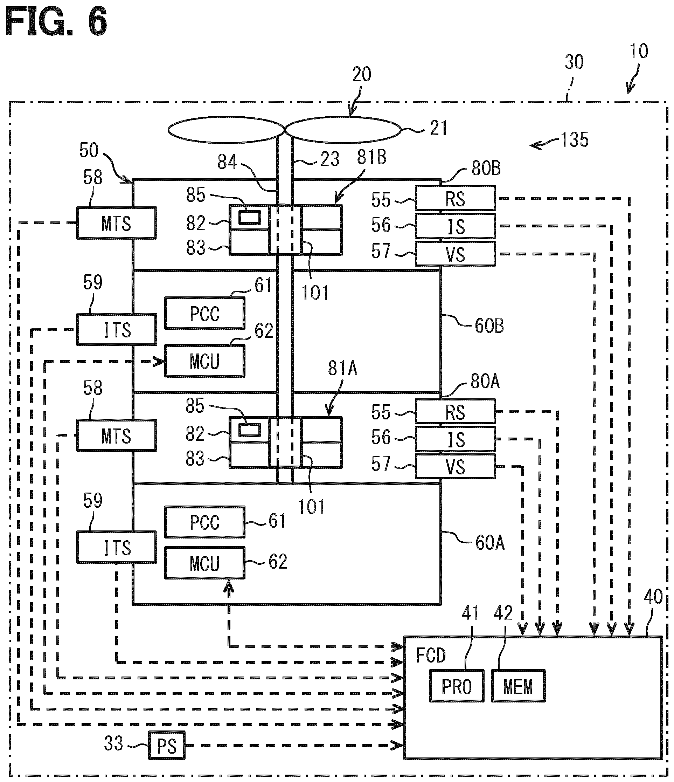

As shown in FIG. 6, the EPU 50 includes multiple motor devices 80 and multiple inverter devices 60. The EPU 50 includes multiple motors 81 by including multiple motor devices 80. In the EPU 50, the multiple motors 81 can be individually driven. In the EPU 50, the inverter circuit 61 and the motor control unit 62 are individually provided for each of the multiple motors 81. In the multiple motors 81, the motor shafts 84 are common. For example, the motor shafts 84 of the multiple motors 81 are connected to each other to form a single shaft.

The EPU 50 includes clutches 101. Each of the clutches 101 can block transmission of a driving force from the motor 81 to the rotor 20. The clutch 101 includes a one-way clutch, an electromagnetic clutch, and the like. The clutch 101 is provided in the motor device 80. The clutch 101 can be shifted between a transmission state and a blocking state. When the clutch 101 is at the transmission state, the driving force of the motor 81 is transmitted to the rotor 20. In this case, the rotor 20 rotates together with the motor 81. When the clutch 101 is at the blocking state, the driving force of the motor 81 is not transmitted to the rotor 20. In this case, the rotor 20 does not rotate even when the motor 81 rotates.

The clutch 101 is provided in each of the multiple motors 81. The multiple clutches 101 allow the multiple motors 81 to rotate individually with respect to the rotor 20. For example, the multiple clutches 101 are respectively provided between the multiple motors 81 and the motor shaft 84.

In the EPU 50, the sensors 55 to 58 are provided in each of the multiple motor devices 80. In the EPU 50, the sensors 55 to 58 in each of the multiple motor devices 80 output the detection signals to the flight control device 40. In the EPU 50, the inverter temperature sensor 59 is provided in each of the multiple inverter devices 60. In the EPU 50, the inverter temperature sensor 59 in each of the multiple inverter devices 60 outputs the detection signal to the flight control device 40.

The EPU 50 includes two motors 81, for example, a first motor 81A and a second motor 81B. The first motor 81A is provided in a first motor device 80A. The second motor 81B is provided in a second motor device 80B. The first motor 81A is driven by a first inverter device 60A. The second motor 81B is driven by a second inverter device 60B. The flight control device 40 can individually control the first motor 81A and the second motor 81B. The first motor 81A and the second motor 81B can rotate independently of each other. The clutch 101 is provided in each of the first motor 81A and the second motor 81B. The clutches 101 allow the first motor 81A and the second motor 81B to rotate relative to each other. The first motor 81A and the second motor 81B correspond to the flight-motors.

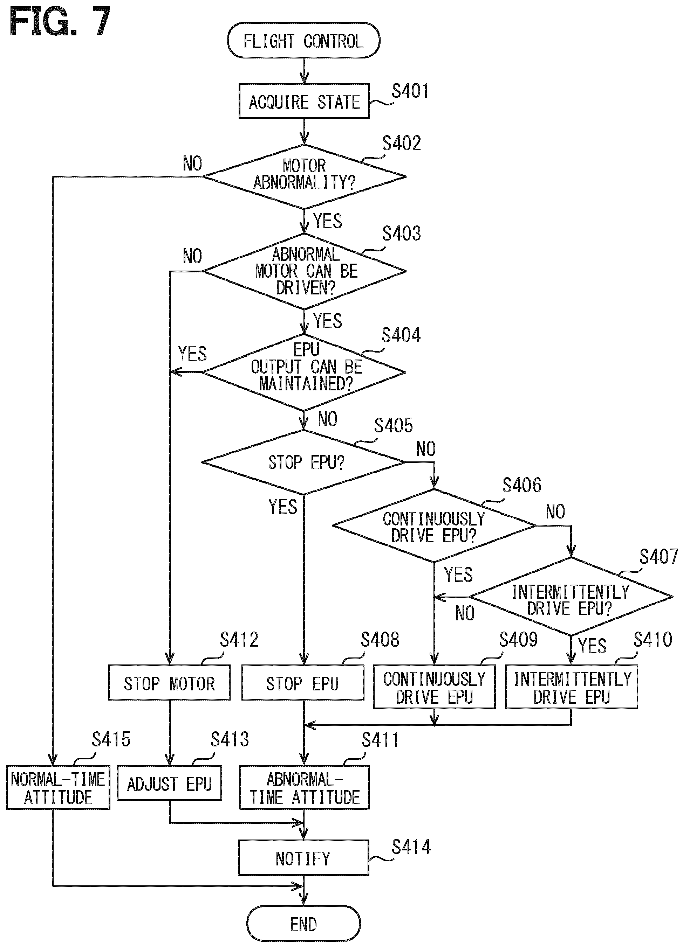

The flight control of the eVTOL 10 will be described with reference to a flowchart of FIG. 7. In step S401 shown in FIG. 7, the flight control device 40 acquires the motor state for all of the motors 81 as in step S101 of the first embodiment. The flight control device 40 individually acquires the motor state for each of the multiple motors 81 provided in one EPU 50. The flight control device 40 acquires the EPU state for all of the EPUs 50. The flight control device 40 acquires the motor output and the EPU output as the motor state and the EPU state. In the present embodiment, since one EPU 50 includes multiple motors 81, a sum of the multiple motor outputs in the one EPU 50 is the EPU output.

In step S402, the flight control device 40 determines whether a motor abnormality occurs, as in step S102 of the first embodiment. The flight control device 40 determines whether a motor abnormality occurs for each of the multiple motors 81 provided in one EPU 50. When no motor abnormality occurs, the flight control device 40 proceeds to step S415 and performs the normal-time attitude process as in step S112 of the first embodiment.

When a motor abnormality occurs, the flight control device 40 proceeds to step S403. Examples of the case where a motor abnormality occurs include a case where one EPU 50 includes both the abnormal motor and the normal motor. For example, in the one EPU 50, one of the first motor 81A and the second motor 81B may be an abnormal motor and the other may be a normal motor. In step S403, the flight control device 40 determines whether the abnormal motor can be driven, as in step S103 of the first embodiment.

When the abnormal motor cannot be driven, the flight control device 40 proceeds to step S412 and performs a motor stop process. The motor stop process is a process for stopping the driving of the abnormal motor, similarly to the driving stop process performed in step S107 in the first embodiment. Regarding the abnormal EPU, when one of the first motor 81A and the second motor 81B is an abnormal motor and the other is a normal motor, the flight control device 40 stops driving the abnormal motor while not stopping driving the normal motor.

After step S412, the flight control device 40 proceeds to step S413 and performs an EPU adjustment process. In the EPU adjustment process, an output of the normal motor is adjusted such that an EPU output of the abnormal EPU is an EPU output before the abnormality occurs. When the EPU output of the abnormal EPU decreases accompanying the stop of the abnormal motor, the flight control device 40 increases the output of the normal motor to compensate for the decrease. In this case, the flight control device 40 maintains the eVTOL 10 at the stable attitude by preventing the EPU output of the abnormal EPU from decreasing. After step S413, the flight control device 40 proceeds to step S414 and performs the notification process as in step S111 of the first embodiment.

When the abnormal motor can be driven, the flight control device 40 determines whether the eVTOL 10 is capable of maintaining the stable attitude in steps S404 to S407. A function of executing the processes in steps S404 to S407 in the flight control device 40 corresponds to the maintaining determination unit. When the eVTOL 10 is capable of maintaining the stable attitude, the flight control device 40 adjusts, in steps S408 to S413, the output of at least one of the normal motor and the abnormal motor so as to maintain the eVTOL 10 at the stable attitude. A function of executing the processes in steps S408 to S413 in the flight control device 40 corresponds to the output adjustment unit.

In steps S 404 and S405, the flight control device 40 performs a determination as to whether the eVTOL 10 is capable of maintaining the stable attitude even if the driving of the abnormal motor is stopped. The determination is performed when the abnormal motor can be driven. A function of executing the processes in steps S404 and S405 in the flight control device 40 corresponds to the stop determination unit.

In step S404, the flight control device 40 determines whether the EPU output of the abnormal EPU is capable of maintaining. In the determination, it is assumed that the driving of the abnormal motor is stopped, and a determination is performed as to whether the decrease in the EPU output accompanying the stop of the driving of the abnormal motor can be compensated for by an increase in the output of the normal motor. The flight control device 40 determines whether the eVTOL 10 is capable of maintaining the stable attitude by determining whether the EPU output of the abnormal EPU can be maintained. When the EPU output of the abnormal EPU can be maintained, the flight control device 40 determines that the eVTOL 10 is capable of maintaining the stable attitude. When the EPU output of the abnormal EPU cannot be maintained, the flight control device 40 determines that the eVTOL 10 is not capable of maintaining the stable attitude.

When the EPU output of the abnormal EPU can be maintained even if the driving of the abnormal motor is stopped, the flight control device 40 determines to stop the driving of the abnormal motor and proceeds to step S412. In step S412, the flight control device 40 performs the driving stop process as in the case where the abnormal motor cannot be driven. A function of executing the process in step S412 in the flight control device 40 corresponds to the driving stop unit. After step S412, the flight control device 40 performs the processes in steps S413 and S414.

In a case where the EPU output of the abnormal EPU cannot be maintained when the driving of the abnormal motor is stopped, the flight control device 40 performs processes in steps S405 to S413. In steps S405 to S413, the flight control device 40 performs a process for maintaining the eVTOL 10 at the normal attitude by at least one of the abnormal EPU and the normal EPU. Steps S405 to S411 basically correspond to steps S104 to S110 of the first embodiment.

In step S405, the flight control device 40 determines whether to stop the driving of the abnormal EPU. In the determination, it is determined whether to stop the driving of each of the abnormal motor and the normal motor in the abnormal EPU. The flight control device 40 determines whether the eVTOL 10 is capable of maintaining the stable attitude even if the driving of the abnormal EPU is stopped. In the determination, as in step S104 of the first embodiment, the normal motor information, the abnormal motor information, and the like are used.

When the eVTOL 10 is capable of maintaining the stable attitude even if the driving of the abnormal EPU is stopped, the flight control device 40 determines to stop the abnormal EPU, and proceeds to step S408. In step S408, the flight control device 40 performs an EPU stop process. In the EPU stop process, a process for stopping the abnormal EPU is performed. In the EPU stop process, the abnormal motor and the normal motor in the abnormal EPU are stopped. In the EPU stop process, for example, the power supply to the abnormal EPU is stopped. A function of executing the process in step S408 in the flight control device 40 corresponds to the driving stop unit. After step S408, the flight control device 40 performs processes in steps S411 and S414.

In a case where the eVTOL 10 is not capable of maintaining the stable attitude when the driving of the abnormal EPU is stopped, the flight control device 40 determines not to stop the driving of the abnormal EPU. When it is determined not to stop the driving of the abnormal EPU, the flight control device 40 determines in steps S406 and S407 whether the eVTOL 10 is capable of maintaining the stable attitude even if the driving of the abnormal EPU is continued. A function of executing the processes in steps S406 and S407 in the flight control device 40 corresponds to the continuation determination unit. When it is determined not to stop the driving of the abnormal EPU, the flight control device 40 continues the driving of the abnormal EPU in steps S409 and S410. A function of executing process in steps S409 and S410 in the flight control device 40 corresponds to the driving continuation unit.

In step S406, the flight control device 40 determines whether to continuously drive the abnormal EPU. In the determination, it is determined whether eVTOL 10 is capable of maintaining the stable attitude when the abnormal EPU is continuously driven. The flight control device 40 assumes that the abnormal EPU is continuously driven, and determines whether the eVTOL 10 can be maintained at the stable attitude using the abnormal motor information, the normal motor information, and the like. For example, when the abnormal EPU is present on the right wing side of the eVTOL 10, the flight control device 40 assumes that the abnormal EPU is continuously driven, and determines whether the eVTOL 10 can be maintained at the stable attitude by increasing or decreasing the EPU output of the normal EPU on the right wing side.

When the abnormal EPU is continuously driven, the flight control device 40 proceeds to step S409 and performs the continuous driving process of the abnormal EPU. In the continuous driving process, a process for continuously driving the abnormal EPU is performed. The flight control device 40 continuously drives the abnormal motor and the normal motor in the abnormal EPU. A function of executing the process in step S409 in the flight control device 40 corresponds to the continuous driving unit. After step S409, the flight control device 40 performs the processes in steps S411 and S414.

When it is determined not to continuously drive the abnormal EPU, the flight control device 40 determines that the eVTOL 10 cannot be maintained at the stable attitude even if the abnormal EPU is continuously driven, and proceeds to step S407. In step S407, the flight control device 40 determines whether to intermittently drive the abnormal EPU. In the determination, it is determined whether eVTOL 10 is capable of maintaining the stable attitude when the abnormal EPU is intermittently driven. The flight control device 40 determines whether the EPU output of the abnormal EPU is excessively large, and determines to intermittently drive the abnormal EPU when the EPU output of the abnormal EPU is excessively large. A function of executing the process in step S407 in the flight control device 40 corresponds to the excessively-large-output determination unit.

For example, when the abnormal EPU is present on the right wing side of the eVTOL 10, the flight control device 40 assumes that the abnormal EPU is intermittently driven, and determines whether the eVTOL 10 can be maintained at the stable attitude by increasing or decreasing the EPU output of the normal EPU on the right wing side.

When it is determined not to intermittently drive the abnormal EPU, the flight control device 40 determines that the EPU output of the abnormal EPU is not excessively large, and proceeds to step S409 to perform the continuous driving process. In this case, even if the EPU output of the abnormal EPU that is continuously driven is excessively small, the EPU output of the abnormal EPU can be utilized to maintain the eVTOL 10 at the stable attitude. After step S409, the flight control device 40 proceeds to step S411 and performs the abnormal-time attitude process. The flight control device 40 adjusts the EPU output of the normal EPU so as to maintain the eVTOL 10 at the stable attitude by utilizing the EPU output of the abnormal EPU that is continuously driven in the abnormal-time attitude process.

When it is determined to intermittently drive the abnormal EPU, the flight control device 40 determines that the EPU output of the abnormal EPU is excessively large, and proceeds to step S410 to perform the intermittent driving process of the abnormal EPU. In the intermittent driving process, a process for intermittently driving the abnormal EPU is performed. The flight control device 40 intermittently drives the abnormal motor and the normal motor in the abnormal EPU. A function of executing the process in step S410 in the flight control device 40 corresponds to the decrease continuation unit.

After step S410, the flight control device 40 proceeds to step S411 and performs the abnormal-time attitude process. The flight control device 40 adjusts the EPU output of the normal EPU so as to maintain the eVTOL 10 at the stable attitude by utilizing the EPU output of the abnormal EPU that is intermittently driven.

According to the present embodiment, when an abnormality occurs in the EPU 50, it is determined whether the eVTOL 10 is capable of maintaining the stable attitude for at least one of a state in which the driving of the abnormal EPU is stopped and a state in which the driving of the abnormal EPU is continued. Therefore, even if the driving of the abnormal EPU is not actually stopped or continued, the attitude of the eVTOL 10 can be estimated. When it is determined that the eVTOL 10 is capable of maintaining the stable attitude, the EPU output of at least one of the abnormal EPU and the normal EPU is adjusted to maintain the eVTOL 10 at the stable attitude. Therefore, even if the driving of the abnormal EPU is actually stopped or continued, the flight attitude of the eVTOL 10 can be maintained at the stable attitude by the abnormal EPU and the normal EPU. Accordingly, the safety of the eVTOL 10 can be enhanced when an abnormality occurs in the EPU 50.

In the present embodiment, the driving modes of the abnormal motor and the normal motor in the abnormal EPU may or may not be the same. For example, in the EPU stop process of step S408, while the driving of the abnormal motor in the abnormal EPU is stopped, the driving of the normal motor may not be stopped. In the continuous driving process of step S409, while the abnormal motor in the abnormal EPU is continuously driven, the normal motor may be intermittently driven or stopped. In the intermittent driving process of step S410, while the abnormal motor in the abnormal EPU is intermittently driven, the normal motor may be continuously driven or stopped.

In the present embodiment, the clutch 101 may not be provided for the motor 81. That is, the multiple motors 81 may not be able to rotate independently of each other. In the configuration, when one of the first motor 81A and the second motor 81B is continuously driven as a normal motor and the other is stopped as an abnormal motor, the abnormal motor is also rotated with the rotation of the motor shaft 84 due to the continuation of the driving of the normal motor. In this case, the abnormal motor rotates with the continuation of the driving of the normal motor, but the abnormal motor does not drive with the power supply.

### <Fifth Embodiment>

In a fifth embodiment, the coil 85 can be electrically divided into multiple coils. Configurations, operations, and effects not particularly described in the fifth embodiment are the same as those of the first embodiment. In the fifth embodiment, differences from the first embodiment will be mainly described.

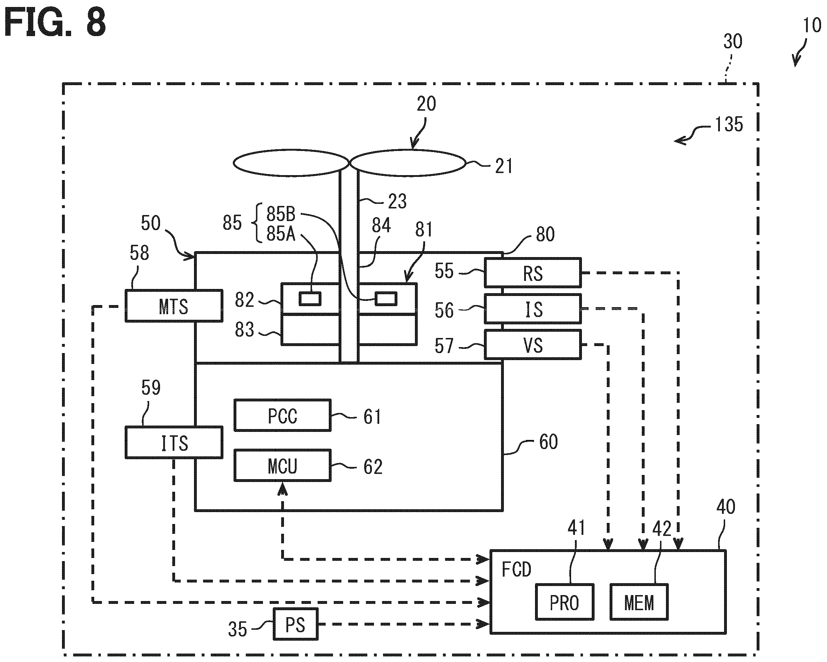

In the motor 81 shown in FIG. 8, the coil 85 includes a first coil 85A and a second coil 85B. In the coil 85, the first coil 85A and the second coil 85B are included in the multiple electrically-dividable coils. For example, both the first coil 85A and the second coil 85B are three-phase coils. In the coil 85, a six-phase coil includes two three-phase coils, that is, the first coil 85A and the second coil 85B. The motor 81 is six-phase driven by energizing both the first coil 85A and the second coil 85B. In the six-phase driving, the motor 81 is driven as a six-phase motor. The motor 81 is three-phase driven by energizing only one of the first coil 85A and the second coil 85B. In the three-phase driving, the motor 81 is driven as a three-phase motor. In the motor 81, the multiple coil portions forming the first coil 85A and the multiple coil portions forming the second coil 85B are alternately arranged, for example, in the circumferential direction of the motor axis.

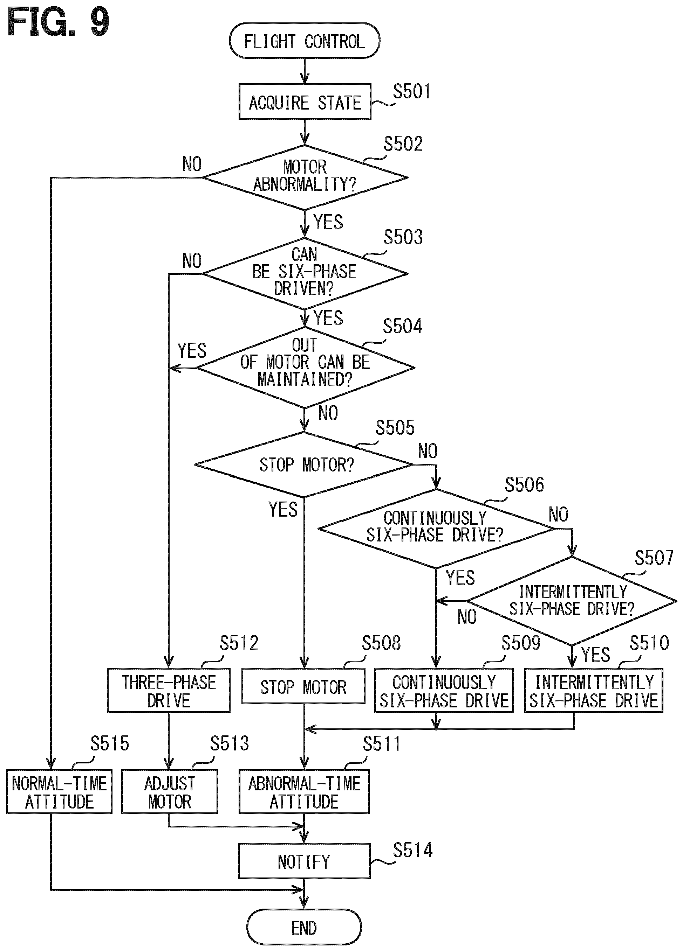

The flight control of the eVTOL 10 will be described with reference to a flowchart of FIG. 9. The flight control device 40 performs processes in steps S501 to S514 as the flight control process. Steps S501 to S514 basically correspond to steps S401 to S414 of the fourth embodiment.

In step S501 shown in FIG. 9, the flight control device 40 acquires the motor state for all of the motors 81. The flight control device 40 acquires, as the motor state, an energization state of the motor 81. The energization state includes energization states of the first coil 85A and the second coil 85B, as the energization state of the coil 85. The energization state includes the current value, the voltage value, the temperature, and the like of each of the coils 85A, 85B.

In step S502, the flight control device 40 determines whether a motor abnormality occurs. Examples of the motor abnormality include a coil abnormality. The coil abnormality is an abnormality related to the coil 85 in the abnormal motor. In the abnormal motor, one of the first coil 85A and the second coil 85B may be the abnormal coil. The abnormal coil is a coil in which a coil abnormality occurs. Examples of the coil abnormality include excessively large or small current flowing through the abnormal coil. When no motor abnormality occurs, the flight control device 40 proceeds to step S515 and performs the normal-time attitude process.

When a motor abnormality occurs, the flight control device 40 proceeds to step S503. In step S503, the flight control device 40 determines whether the abnormal motor can be six-phase driven. In the six-phase driving, the abnormal motor is driven as a six-phase motor. In the six-phase driving, the first coil 85A and the second coil 85B are energized. The flight control device 40 determines whether the first coil 85A and the second coil 85B of the abnormal motor can be energized. When both the first coil 85A and the second coil 85B can be energized, the flight control device 40 determines that the abnormal motor can be six-phase driven. When one of the first coil 85A and the second coil 85B cannot be energized due to an abnormal coil or the like, the flight control device 40 determines that the abnormal motor cannot be six-phase driven. The flight control device 40 determines whether a secondary abnormality occurs accompanying the energization of the abnormal motor, for example. When it is determined that the secondary abnormality occurs due to the energization of the abnormal coil, the flight control device 40 determines that the abnormal coil cannot be energized.

When the abnormal motor cannot be six-phase driven, the flight control device 40 proceeds to step S512 and performs a three-phase driving process of the abnormal motor. The three-phase driving process is a process for driving the abnormal motor as a three-phase motor. In the abnormal motor, when one of the first coil 85A and the second coil 85B is an abnormal coil and the other is a normal coil, the flight control device 40 stops energization of the abnormal coil and does not stop energization of the normal coil. In this case, the abnormal motor is three-phase driven by energizing the normal coil. The normal coil is a coil in which no coil abnormality occurs.

After step S512, the flight control device 40 proceeds to step S513 and performs a motor adjustment process. In the motor adjustment process, a motor output of the three-phase driven abnormal motor is adjusted such that the motor output of the abnormal motor is a motor output before the abnormality occurs. When the output of the abnormal motor decreases due to the change from the six-phase driving to the three-phase driving, the flight control device 40 increases the output of the three-phase driven abnormal motor to compensate for the decrease. For example, the flight control device 40 increases the output of the three-phase driven abnormal motor by increasing an energization amount to the normal coil. In this case, the flight control device 40 maintains the eVTOL 10 at the stable attitude by preventing the output of the abnormal motor from decreasing. After step S513, the flight control device 40 proceeds to step S514.

When the abnormal motor cannot be six-phase driven, the flight control device 40 determines whether the eVTOL 10 is capable of maintaining the stable attitude in steps S504 to S507. A function of executing process in steps S504 to S507 in the flight control device 40 corresponds to a coil determination unit. When the eVTOL 10 is not capable of maintaining the stable attitude, the flight control device 40 performs at least one output adjustment of the six-phase driving and the three-phase driving of the abnormal motor so as to maintain the eVTOL 10 at the stable attitude in steps S508 to S513. A function of executing the processes in steps S508 to S513 in the flight control device 40 corresponds to the coil adjustment unit.

In steps S504 and S505, the flight control device 40 determines whether the eVTOL 10 is capable of maintaining the stable attitude even if the driving of the abnormal motor is stopped. The determination is performed when the abnormal motor can be six-phase driven.

In step S504, the flight control device 40 determines whether the output of the abnormal motor can be maintained. In the determination, it is assumed that the energization of the abnormal coil is stopped, and it is determined whether the decrease in the output of the abnormal motor due to the change from the six-phase driving to the three-phase driving can be compensated for by the increase in the output of the three-phase driven abnormal motor. The flight control device 40 determines whether the eVTOL 10 is capable of maintaining the stable attitude by determining whether the output of the abnormal motor can be maintained. When the output of the abnormal motor can be maintained, the flight control device 40 determines that the eVTOL 10 is capable of maintaining the stable attitude. When the output of the abnormal motor cannot be maintained, the flight control device 40 determines that the eVTOL 10 is not capable of maintaining the stable attitude.

When the output of the abnormal motor can be maintained even if the abnormal motor is changed from the six-phase driving to the three-driving, the flight control device 40 determines to three-phase drive the abnormal motor, and proceeds to step S512. In step S512, the flight control device 40 performs the three-phase driving process as in the case where the abnormal motor cannot be six-phase driven. After step S512, the flight control device 40 performs the processes in steps S513 and S514.

When the output of the abnormal motor cannot be maintained when the abnormal motor is changed from the six-phase driving to the three-phase driving, the flight control device 40 performs the processes in steps S505 to S513. In steps S505 to S513, the flight control device 40 performs a process for maintaining the eVTOL 10 at the normal attitude by at least one of the abnormal motor and the normal motor. Steps S505 to S511 basically correspond to steps S104 to S110 of the first embodiment.

In step S505, the flight control device 40 determines whether to stop the driving of the abnormal motor. In the determination, it is determined whether to stop the driving of the abnormal motor. The flight control device 40 determines whether the eVTOL 10 is capable of maintaining the stable attitude even if the driving of the abnormal motor is stopped.

When the eVTOL 10 is capable of maintaining the stable attitude even if the driving of the abnormal motor is stopped, the flight control device 40 determines to stop the abnormal motor, and proceeds to step S508. In step S508, the flight control device 40 performs the motor stop process. In the motor stop process, a process for stopping the abnormal motor is performed. In the motor stop process, the energization of the abnormal coil and the normal coil in the abnormal motor is stopped. In the motor stop process, as adjustment in energization modes of the abnormal coil and the normal coil, the energization modes of the abnormal coil and the normal coil are set to a stopped state. In the motor stop process, neither three-phase driving nor six-phase driving of the abnormal motor is performed. After step S508, the flight control device 40 performs the processes in steps S511 and S514.

In a case where the eVTOL 10 is not capable of maintaining the stable attitude when the driving of the abnormal motor is stopped, the flight control device 40 determines not to stop the driving of the abnormal motor in step S505. When it is determined not to stop the driving of the abnormal motor, the flight control device 40 determines in steps S506 and S507 whether the eVTOL 10 is capable of maintaining the stable attitude even if the six-phase driving of the abnormal motor is continued. When it is determined not to stop the driving of the abnormal motor, the flight control device 40 continues the six-phase driving of the abnormal motor in steps S509 and S510.

In step S506, the flight control device 40 determines whether to continuously six-phase drive the abnormal motor. In the determination, it is determined whether the eVTOL 10 is capable of maintaining the stable attitude when the abnormal motor is continuously six-phase driven. The continuous six-phase driving means that the abnormal motor is continuously six-phase driven. The flight control device 40 assumes that the abnormal motor is continuously six-phase driven, and determines whether the eVTOL 10 can be maintained at the stable attitude using the abnormal motor information, the normal motor information, and the like. For example, when the abnormal motor is present on the right wing side of the eVTOL 10, the flight control device 40 assumes that the abnormal motor is continuously six-phase driven, and determines whether the eVTOL 10 can be maintained at the stable attitude by increasing or decreasing the output of the normal motor on the right wing side.

When it is determined to continuously six-phase drive the abnormal motor, the flight control device 40 proceeds to step S509 and performs a continuous six-phase driving process of the abnormal motor. In the continuous six-phase driving process, a process for continuously six-phase driving the abnormal motor is performed. The flight control device 40 continuously energizes the abnormal coil and the normal coil in the abnormal motor. In the continuous six-phase driving process, as adjustment in the energization modes of the abnormal coil and the normal coil, the energization modes of the abnormal coil and the normal coil are set to continuous energization. After step S509, the flight control device 40 performs the processes in steps S511 and S514.

When it is determined not to continuously six-phase drive the abnormal motor, the flight control device 40 determines that the eVTOL 10 cannot be maintained at the stable attitude even if the abnormal motor is continuously six-phase driven, and proceeds to step S507. In step S507, the flight control device 40 determines whether to intermittently six-phase drive the abnormal motor. In the determination, it is determined whether the eVTOL 10 is capable of maintaining the stable attitude when the abnormal motor is intermittently six-phase driven. The intermittent six-phase driving means that the abnormal motor is intermittently six-phase driven. The flight control device 40 determines whether the output of the six-phase driven abnormal motor at a predetermined timing is excessively large. When the output of the abnormal motor at the predetermined timing is excessively large, the flight control device 40 determines to intermittently six-phase drive the abnormal motor.

For example, when the abnormal motor is present on the right wing side of the eVTOL 10, the flight control device 40 assumes that the abnormal motor is intermittently six-phase driven, and determines whether the eVTOL 10 can be maintained at the stable attitude by increasing or decreasing the output of the normal motor on the right wing side.

When it is determined not to intermittently six-phase drive the abnormal motor, the flight control device 40 determines that the output of the abnormal motor is not excessively large and is excessively small, and proceeds to step S509 to perform the continuous six-phase driving process. In this case, even if the output of the abnormal motor that is continuously six-phase driven is excessively small, the output of the abnormal motor can be utilized to maintain the eVTOL 10 at the stable attitude. After step S509, the flight control device 40 proceeds to step S511 and performs the abnormal-time attitude process. The flight control device 40 adjusts the output of the normal motor so as to maintain the eVTOL 10 at the stable attitude by utilizing the output of the abnormal motor that is continuously six-phase driven in the abnormal-time attitude process.

When it is determined to intermittently six-phase drive the abnormal motor, the flight control device 40 determines that the output of the abnormal motor is excessively large and proceeds to step S510 to perform an intermittent six-phase driving process of the abnormal motor. In the intermittent six-phase driving process, a process for intermittently six-phase driving the abnormal motor is performed. The flight control device 40 intermittently energizes the abnormal coil and the normal coil in the abnormal motor. In the intermittent six-phase driving process, as adjustment in energization modes of the abnormal coil and the normal coil, the energization modes of the abnormal coil and the normal coil are set to intermittent energization.

After step S510, the flight control device 40 proceeds to step S511 and performs the abnormal-time attitude process. The flight control device 40 adjusts the output of the normal motor so as to maintain the eVTOL 10 at the stable attitude by utilizing the output of the abnormal motor that is intermittently six-phase driven.

According to the present embodiment, when an abnormality occurs in the motor 81, it is determined whether the eVTOL 10 is capable of maintaining the stable attitude for at least one of a state in which the energization of the abnormal coil is stopped and a state in which the energization of the abnormal coil is continued. Therefore, even if the energization of the abnormal coil is not actually stopped or continued, the attitude of the eVTOL 10 can be estimated. When it is determined that the eVTOL 10 is capable of maintaining the stable attitude, the energization state of at least one of the abnormal coil and the normal coil is adjusted to maintain the eVTOL 10 at the stable attitude. Therefore, even if the energization of the abnormal coil is actually stopped or continued, the flight attitude of the eVTOL 10 can be maintained at the stable attitude by the abnormal coil and the normal coil. Accordingly, the safety of the eVTOL 10 can be enhanced when an abnormality occurs in the coil 85 of the motor 81.

In the present embodiment, the energization states of the abnormal coil and the normal coil in the abnormal motor may or may not be the same. For example, in the motor stop process of step S508, while the energization of the abnormal coil in the abnormal motor is stopped, the energization of the normal motor may not be stopped. In the continuous six-phase driving process of step S509, while the abnormal coil in the abnormal motor is continuously energized, the energization of the normal coil may be intermittently continued or stopped. In the intermittent six-phase driving process of step S510, while the abnormal coil in the abnormal motor is intermittently energized, the energization of the normal coil may be continuously continued or stopped.

### <Other Embodiments>

The disclosure in the present description is not limited to the illustrated embodiments. The disclosure encompasses the illustrated embodiments and modifications thereof made by those skilled in the art. For example, the disclosure is not limited to the combination of components and elements described in the embodiments, and various modifications and implementations can be performed. The disclosure may be implemented in various combinations. The disclosure may have an additional portion that can be added to the embodiments. The disclosure encompasses the omission of components and elements of the embodiments. The disclosure encompasses the replacement or combination of components, elements between one embodiment and another embodiment. The disclosed technical scope is not limited to those described in the embodiments. The disclosed technical scope is indicated by the description of the claims, and should be construed to include all changes within the meaning and range equivalent to the description of the claims.

In each of the embodiments described above, the maintaining determination as to whether the eVTOL 10 is capable of maintaining the stable attitude may be performed at least before and/or after the output of the motor 81 is adjusted. For example, in the first embodiment described above, the maintaining determination may be performed after the driving of the abnormal motor is stopped by the driving stop process in step S107, in addition to step S104.

In each of the embodiments described above, the flight control device 40 may have only one of the function of continuously driving the abnormal motor and the function of intermittently driving the abnormal motor as the function of continuing the driving of the abnormal motor. For example, in the first embodiment described above, the flight control device 40 may have only one of the function of executing the continuous driving process in step S108 and the function of executing the intermittent driving process in step S109.

In each of the embodiments described above, the decrease continuation unit that decreases the output of the abnormal motor may adjust the output of the abnormal motor to decrease the output of the abnormal motor at a predetermined timing. For example, in step S109 in the first embodiment described above, an energization amount to the abnormal motor may be reduced to decrease the output of the abnormal motor at a predetermined timing. When the abnormality of the abnormal motor is that the motor output at a predetermined timing cannot be adjusted, it is preferable to decrease the average output of the abnormal motor.

In each of the embodiments described above, in the notification process, in addition to the pilot, a notification destination to which the occurrence of a motor abnormality is notified may include an external device capable of communicating with the flight control device 40. Examples of the external device include a control device provided in a control center and a remote device capable of remotely controlling the eVTOL 10.

In each of the embodiments described above, the eVTOL 10 may not be a tilt rotor aircraft. That is, one rotor 20 does not need to serve as both the lift-rotor and the cruise-rotor. For example, one rotor 20 functions as only one of the lift-rotor and the cruise-rotor. In the configuration, in the eVTOL 10, the multiple rotors 20 include the lift-rotor and the cruise-rotor. In the eVTOL 10, the lift-rotor is driven when the eVTOL 10 ascends, and the cruise-rotor is driven when the eVTOL 10 moves forward. The lift-rotor may be referred to as the hovering rotor.

In each of the embodiments described above, the vertical take-off and landing aircraft on which the flight control device 40 is mounted may be an electric-type vertical take-off and landing aircraft in which at least one rotor 20 is driven by at least one EPU 50. For example, one rotor 20 may be driven by multiple EPUs 50, or multiple rotors 20 may be driven by one EPU 50.

In each of the embodiments described above, the flight vehicle on which the flight control device 40 is mounted may not be the vertical take-off and landing aircraft as long as being of an electric type. For example, the flight vehicle may be a flight vehicle capable of taking off and landing while gliding, as an example of the electric aircraft. The flight vehicle may be a rotorcraft, or a fixed-wing aircraft. The flight vehicle may be an unmanned flight vehicle carrying no person.

In each of the embodiments described above, the flight control device 40 is implemented by a control system including at least one computer. The control system includes at least one processor that is hardware. When the processor is referred to as a hardware processor, the hardware processor can be implemented by (i), (ii), or (iii) to be described below.
(i) The hardware processor may be a hardware logic circuit. In this case, the computer is implemented by a digital circuit including many programmed logic units. Each of the logical units is, for example, a gate circuit. The digital circuit may include a memory in which at least one of a program and data is stored. The computer may be implemented by an analog circuit. The computer may be implemented by a combination of the digital circuit and the analog circuit.
(ii) The hardware processor may be at least one processor core that executes a program stored in at least one memory. In this case, the computer includes at least one memory and at least one processor core. The processor core is referred to as a CPU, for example. The memory is also referred to as a storage medium. The memory is a non-transitory and tangible storage medium non-temporarily storing "at least one of a program and data" readable by the processor.
(iii) The hardware processor may be a combination of (i) and (ii) described above. (i) and (ii) are provided on different chips or on a common chip.

That is, at least one of means and functions provided by the flight control device 40 can be provided by hardware alone, software alone, or a combination thereof.

## Claims

1. A flight control device (40) configured to control driving of a plurality of flight-motors (81, 81A, 81B) to maintain an electric flight vehicle (10), which includes the flight-motors, at a stable attitude, the flight control device comprising:
a maintaining determination unit (S104 to S106, S404 to S407) configured to, when an abnormality occurs in the flight-motors, determine whether the electric flight vehicle is capable of maintaining the stable attitude for at least one of a state in which, among the flight-motors, an abnormal motor, in which the abnormality occurs, stops driving and a state in which the abnormal motor continues driving; and
an output adjustment unit (S107 to S110, S301 to S303, S408 to S413) configured to, based on determination that the electric flight vehicle is capable of maintaining the stable attitude, perform output adjustment of, among the flight-motors, at least one of a normal motor, in which the abnormality does not occur, and the abnormal motor to maintain the electric flight vehicle at the stable attitude.

2. The flight control device according to claim 1, wherein
the output adjustment unit includes a driving continuation unit (S108, S109, S409, S410) configured to, as the output adjustment, continue driving of the abnormal motor, when the maintaining determination unit determines that the electric flight vehicle is not capable of maintaining the stable attitude in the state in which the abnormal motor stops driving.

3. The flight control device according to claim 1 or 2, further comprising:
an excessively-large-output determination unit (S106, S407) configured to, when the maintaining determination unit determines that the electric flight vehicle is not capable of maintaining the stable attitude in the state in which the abnormal motor stops driving, determine whether an output of the abnormal motor is excessively large, wherein
the output adjustment unit includes a decrease continuation unit (S109, S411) configured to, as the output adjustment, continue driving of the abnormal motor, such that the output of the abnormal motor decreases, when the excessively-large-output determination unit determines that the output is excessively large.

4. The flight control device according to claim 3, wherein
the decrease continuation unit is configured to intermittently continue driving of the abnormal motor, such that the output of the abnormal motor decreases.

5. The flight control device according to claim 3 or 4, wherein
the output adjustment unit includes a continuous driving unit (S108, S409) configured to continuously continue driving of the abnormal motor, when the excessively-large-output determination unit determines that the output is not excessively large.

6. The flight control device according to any one of claims 1 to 5, wherein
the output adjustment unit includes a driving stop unit (S107, S408, S412) configured to stop driving of the abnormal motor, when the maintaining determination unit determines that the electric flight vehicle is capable of maintaining the stable attitude in the state in which the abnormal motor stops driving.

7. The flight control device according to any one of claims 1 to 6, further comprising:
an evacuation request unit (S206, S207) configured to request evacuation of the electric flight vehicle, when the electric flight vehicle is not capable of flying while maintaining at the stable attitude even when the output adjustment unit performs the output adjustment.

8. The flight control device according to claim 7, wherein
the evacuation request unit includes a landing request unit (S206) configured to request the electric flight vehicle to vertically land at a landing possible location, at which the electric flight vehicle is capable of landing, when the landing possible location exists below the electric flight vehicle and when the electric flight vehicle is capable of maintaining the stable attitude in a case where the electric flight vehicle vertically lands.

9. The flight control device according to claim 7 or 8, wherein
the evacuation request unit includes a search request unit (S207) configured to request a search for a landing possible location, at which the electric flight vehicle is capable of landing, when the landing possible location does not exist below the electric flight vehicle or when the electric flight vehicle is not capable of maintaining the stable attitude in a case where the electric flight vehicle vertically lands.

10. The flight control device according to any one of claims 1 to 9, wherein
the maintaining determination unit includes
a stop determination unit (S104, S404, S405) configured to determine whether the electric flight vehicle is capable of maintaining the stable attitude in the state in which the abnormal motor stops driving, and
a continuation determination unit (S105, S106, S406, S407) configured to determine whether the electric flight vehicle is capable of maintaining the stable attitude in the state in which the abnormal motor continues driving.

11. A flight control program for controlling driving of a plurality of flight-motors (81, 81A, 81B) to cause an electric flight vehicle (10), which includes the flight-motors, to fly at a stable attitude, the flight control program configured to cause at least one processor (41) to function as:
a maintaining determination unit (S104 to S106, S404 to S407) configured to, when an abnormality occurs in the flight-motors, determine whether the electric flight vehicle is capable of maintaining the stable attitude for at least one of a state in which, among the flight-motors, an abnormal motor, in which the abnormality occurs, stops driving and a state in which the abnormal motor continues driving; and
an output adjustment unit (S107 to S110, S301 to S303, S408 to S413) configured to, based on determination that the electric flight vehicle is capable of maintaining the stable attitude, perform output adjustment of, among the flight-motors, at least one of a normal motor, in which the abnormality does not occur, and the abnormal motor to maintain the electric flight vehicle at the stable attitude.

12. A flight control method for controlling driving of a plurality of flight-motors (81, 81A, 81B) to cause an electric flight vehicle (10), which includes the flight-motors, to fly at a stable attitude, the flight control method to be performed by at least one processor (41) and comprising:
determining (S104 to S106, S404 to S407), when an abnormality occurs in the flight-motors, whether the electric flight vehicle is capable of maintaining the stable attitude for at least one of a state in which, among the flight-motors, an abnormal motor, in which the abnormality occurs, stops driving and a state in which the abnormal motor continues driving; and
performing (S107 to S110, S301 to S303, S408 to S413), based on determination that the electric flight vehicle is capable of maintaining the stable attitude, output adjustment of, among the flight-motors, at least one of a normal motor, in which the abnormality does not occur, and the abnormal motor to maintain the electric flight vehicle at the stable attitude.

## Patentansprüche

1. Flugsteuerungsvorrichtung (40), die konfiguriert ist, um den Antrieb einer Vielzahl von Flugmotoren (81, 81A, 81B) zu steuern, um eine stabile Lage für ein elektrisches Fluggerät (10), das die Flugmotoren aufweist, aufrecht zu erhalten, wobei die Flugsteuerungsvorrichtung umfasst:
eine Aufrechterhaltungsbestimmungseinheit (S104 bis S106, S404 bis S407), die konfiguriert ist, um, wenn eine Anomalie in den Flugmotoren auftritt, zu bestimmen, ob das elektrische Fluggerät die stabile Lage für mindestens einen von einem Zustand, in dem unter den Flugmotoren ein anomaler Motor, in dem die Anomalie auftritt, aufhört anzutreiben, und einem Zustand, in dem der anomale Motor weiter antreibt, aufrechterhalten kann; und
eine Leistungsanpassungseinheit (S107 bis S110, S301 bis S303, S408 bis S413), die konfiguriert ist, um auf der Grundlage der Bestimmung, dass das elektrische Fluggerät die stabile Lage aufrechterhalten kann, unter den Flugmotoren eine Leistungsanpassung von mindestens einem von einem normalen Motor, bei dem die Anomalie nicht auftritt, und dem anomalen Motor durchzuführen, um die stabile Lage für das elektrische Fluggerät aufrecht zu erhalten.

2. Flugsteuerungsvorrichtung gemäß Anspruch 1, wobei
die Leistungsanpassungseinheit eine Antriebsfortführungseinheit (S108, S109, S409, S410) aufweist, die konfiguriert ist, um als die Leistungsanpassung den Antrieb des anomalen Motors fortzuführen, wenn die Aufrechterhaltungsbestimmungseinheit bestimmt, dass das elektrische Fluggerät die stabile Lage in dem Zustand, in dem der anomale Motor aufhört anzutreiben, nicht aufrechterhalten kann.

3. Flugsteuerungsvorrichtung gemäß Anspruch 1 oder 2, ferner umfassend:
eine Bestimmungseinheit (S106, S407) für eine übermäßig große Leistung, die konfiguriert ist, um zu bestimmen, wenn die Aufrechterhaltungsbestimmungseinheit bestimmt, dass das elektrische Fluggerät die stabile Lage in dem Zustand, in dem der anomale Motor aufhört anzutreiben, nicht aufrechterhalten kann, ob eine Leistung des anomalen Motors übermäßig groß ist, wobei
die Leistungsanpassungseinheit eine Verringerungsfortführungseinheit (S109, S411) aufweist, die konfiguriert ist, um als die Leistungsanpassung den Antrieb des anomalen Motors fortzuführen, so dass die Leistung des anomalen Motors sich verringert, wenn die Bestimmungseinheit für eine übermäßig große Leistung bestimmt, dass die Leistung übermäßig groß ist.

4. Flugsteuerungsvorrichtung gemäß Anspruch 3, wobei
die Verringerungsfortführungseinheit konfiguriert ist, um den Antrieb des anomalen Motors intermittierend fortzuführen, so dass die Leistung des anomalen Motors sich verringert.

5. Flugsteuerungsvorrichtung gemäß Anspruch 3 oder 4, wobei
die Leistungsanpassungseinheit eine Einheit für kontinuierlichen Antrieb (S108, S409) aufweist, die konfiguriert ist, um den Antrieb des anomalen Motors kontinuierlich fortzuführen, wenn die Bestimmungseinheit für eine übermäßig große Leistung bestimmt, dass die Leistung nicht übermäßig groß ist.

6. Flugsteuerungsvorrichtung gemäß einem der Ansprüche 1 bis 5, wobei
die Leistungsanpassungseinheit eine Antriebsstoppeinheit (S107, S408, S412) aufweist, die konfiguriert ist, um den Antrieb des anomalen Motors zu stoppen, wenn die Aufrechterhaltungsbestimmungseinheit bestimmt, dass das elektrische Fluggerät die stabile Lage in dem Zustand, in dem der anomale Motor den Antrieb stoppt, aufrechterhalten kann.

7. Flugsteuerungsvorrichtung gemäß einem der Ansprüche 1 bis 6, ferner umfassend:
eine Evakuierungsanforderungseinheit (S206, S207), die konfiguriert ist, um die Evakuierung des elektrischen Fluggeräts anzufordern, wenn das elektrische Fluggerät nicht fliegen kann, während es die stabile Lage hält, selbst wenn die Leistungsanpassungseinheit die Leistungsanpassung durchführt.

8. Flugsteuerungsvorrichtung gemäß Anspruch 7, wobei
die Evakuierungsanforderungseinheit eine Landeanforderungseinheit (S206) aufweist, die konfiguriert ist, um von dem elektrischen Fluggerät eine senkrechte Landung an einem möglichen Landeort, an dem das elektrische Fluggerät landen kann, anzufordern, wenn der mögliche Landeort unter dem elektrischen Fluggerät existiert und wenn das elektrische Fluggerät die stabile Lage in einem Fall, in dem das elektrische Fluggerät senkrecht landet, aufrechterhalten kann.

9. Flugsteuerungsvorrichtung gemäß Anspruch 7 oder 8, wobei
die Evakuierungsanforderungseinheit eine Suchanforderungseinheit (S207) aufweist, die konfiguriert ist, um eine Suche nach einem möglichen Landeort anzufordern, an dem das elektrische Fluggerät landen kann, wenn der mögliche Landeort nicht unter dem elektrischen Fluggerät existiert oder wenn das elektrische Fluggerät die stabile Lage in einem Fall, in dem das elektrische Fluggerät senkrecht landet, nicht aufrechterhalten kann.

10. Flugsteuerungsvorrichtung gemäß einem der Ansprüche 1 bis 9, wobei
die Aufrechterhaltungsbestimmungseinheit aufweist
eine Stopp-Bestimmungseinheit (S104, S404, S405), die konfiguriert ist, um zu bestimmen, ob das elektrische Fluggerät die stabile Lage in dem Zustand, in dem der anomale Motor den Antrieb stoppt, aufrechterhalten kann, und
eine Fortführungsbestimmungseinheit (S105, S106, S406, S407), die konfiguriert ist, um zu bestimmen, ob das elektrische Fluggerät die stabile Lage in dem Zustand, in dem der anomale Motor weiter antreibt, aufrechterhalten kann.

11. Flugsteuerungsprogramm zum Steuern des Antriebs einer Vielzahl von Flugmotoren (81, 81A, 81B), um zu veranlassen, dass ein elektrisches Fluggerät (10), das die Flugmotoren aufweist, in einer stabilen Lage fliegt, wobei das Flugsteuerungsprogramm konfiguriert ist, um mindestens einen Prozessor (41) zu veranlassen, wie folgt zu funktionieren:
als eine Aufrechterhaltungsbestimmungseinheit (S104 bis S106, S404 bis S407), die konfiguriert ist, um, wenn eine Anomalie in den Flugmotoren auftritt, zu bestimmen, ob das elektrische Fluggerät die stabile Lage für mindestens einen von einem Zustand, in dem unter den Flugmotoren ein anomaler Motor, in dem die Anomalie auftritt, aufhört anzutreiben, und einem Zustand, in dem der anomale Motor weiter antreibt, aufrechterhalten kann; und
als eine Leistungsanpassungseinheit (S107 bis S110, S301 bis S303, S408 bis S413), die konfiguriert ist, um auf der Grundlage der Bestimmung, dass das elektrische Fluggerät die stabile Lage aufrechterhalten kann, unter den Flugmotoren eine Leistungsanpassung von mindestens einem von einem normalen Motor, bei dem die Anomalie nicht auftritt, und dem anomalen Motor durchzuführen, um das elektrische Fluggerät in der stabilen Lage aufrecht zu erhalten.

12. Flugsteuerungsverfahren zum Steuern des Antriebs einer Vielzahl von Flugmotoren (81, 81A, 81B), um zu veranlassen, dass ein elektrisches Fluggerät (10), das die Flugmotoren aufweist, in einer stabilen Lage fliegt, wobei das Flugsteuerungsverfahren von mindestens einem Prozessor (41) auszuführen ist und Folgendes umfasst:
Bestimmen (S104 bis S106, S404 bis S407), wenn eine Anomalie in den Flugmotoren auftritt, ob das elektrische Fluggerät die stabile Lage für mindestens einen von einem Zustand, in dem unter den Flugmotoren ein anomaler Motor, in dem die Anomalie auftritt, aufhört anzutreiben, und einem Zustand, in dem der anomale Motor weiter antreibt, aufrechterhalten kann; und
Durchführen (S107 bis S110, S301 bis S303, S408 bis S413), auf der Grundlage der Bestimmung, dass das elektrische Fluggerät die stabile Lage aufrechterhalten kann, einer Leistungsanpassung, unter den Flugmotoren, von mindestens einem von einem normalen Motor, in dem die Anomalie nicht auftritt, und dem anomalen Motor, um die stabile Lage für das elektrische Fluggerät aufrecht zu erhalten.

## Revendications

1. Dispositif de commande de vol (40) configuré pour commander l'entraînement d'une pluralité de moteurs de vol (81, 81A, 81B) afin de maintenir un véhicule volant électrique (10), qui comprend les moteurs de vol, à une attitude stable, le dispositif de commande de vol comprenant :
une unité de détermination de maintien (S104 à S106, S404 à S407) configurée pour, lorsqu'une anomalie se produit dans les moteurs de vol, déterminer si le véhicule volant électrique est capable de maintenir l'attitude stable pour au moins l'un d'un état dans lequel, parmi les moteurs de vol, un moteur anormal, dans lequel l'anomalie se produit, arrête d'entraîner et d'un état dans lequel le moteur anormal continue d'entraîner ; et
une unité d'ajustement de puissance (S107 à S110, S301 à S303, S408 à S413) configurée pour, sur la base de la détermination que le véhicule volant électrique est capable de maintenir l'attitude stable, effectuer l'ajustement de la puissance, parmi les moteurs de vol, d'au moins l'un d'un moteur normal, dans lequel l'anomalie ne se produit pas, et du moteur anormal pour maintenir le véhicule volant électrique à l'attitude stable.

2. Dispositif de commande de vol selon la revendication 1, dans lequel
l'unité d'ajustement de puissance comprend une unité de poursuite d'entraînement (S108, S109, S409, S410) configurée pour, en tant qu'ajustement de la puissance, continuer d'entraîner le moteur anormal, lorsque l'unité de détermination de maintien détermine que le véhicule volant électrique n'est pas capable de maintenir l'attitude stable dans l'état dans lequel le moteur anormal arrête d'entraîner.

3. Dispositif de commande de vol selon la revendication 1 ou 2, comprenant en outre :
une unité de détermination de puissance excessivement grande (S106, S407) configurée pour, lorsque l'unité de détermination de maintien détermine que le véhicule volant électrique n'est pas capable de maintenir l'attitude stable dans l'état dans lequel le moteur anormal arrête d'entraîner, déterminer si une puissance du moteur anormal est excessivement grande, dans lequel
l'unité d'ajustement de puissance comprend une unité de poursuite de diminution (S109, S411) configurée pour, en tant qu'ajustement de la puissance, continuer d'entraîner le moteur anormal, de sorte que la puissance du moteur anormal diminue, lorsque l'unité de détermination de puissance excessivement grande détermine que la puissance est excessivement grande.

4. Dispositif de commande de vol selon la revendication 3, dans lequel
l'unité de poursuite de diminution est configurée pour poursuivre de manière intermittente l'entraînement du moteur anormal, de sorte que la puissance du moteur anormal diminue.

5. Dispositif de commande de vol selon la revendication 3 ou 4, dans lequel
l'unité d'ajustement de puissance comprend une unité d'entraînement continu (S108, S409) configurée pour poursuivre en continu l'entraînement du moteur anormal, lorsque l'unité de détermination de la puissance excessivement grande détermine que la puissance n'est pas excessivement grande.

6. Dispositif de commande de vol selon l'une quelconque des revendications 1 à 5, dans lequel
l'unité d'ajustement de puissance comprend une unité d'arrêt de l'entraînement (S107, S408, S412) configurée pour arrêter l'entraînement du moteur anormal, lorsque l'unité de détermination de maintien détermine que le véhicule volant électrique est capable de maintenir l'attitude stable dans l'état dans lequel le moteur anormal arrête l'entraînement.

7. Dispositif de commande de vol selon l'une quelconque des revendications 1 à 6, comprenant en outre :
une unité de demande d'évacuation (S206, S207) configurée pour demander l'évacuation du véhicule volant électrique, lorsque le véhicule volant électrique n'est pas capable de voler tout en maintenant l'attitude stable, même lorsque l'unité d'ajustement de puissance effectue le l'ajustement de la puissance.

8. Dispositif de commande de vol selon la revendication 7, dans lequel
l'unité de demande d'évacuation comprend une unité de demande d'atterrissage (S206) configurée pour demander au véhicule volant électrique d'atterrir verticalement à un emplacement d'atterrissage possible, auquel le véhicule volant électrique est capable d'atterrir, lorsque l'emplacement d'atterrissage possible existe sous le véhicule volant électrique et lorsque le véhicule volant électrique est capable de maintenir l'attitude stable dans le cas où le véhicule volant électrique atterrit verticalement.

9. Dispositif de commande de vol selon la revendication 7 ou 8, dans lequel
l'unité de demande d'évacuation comprend une unité de demande de recherche (S207) configurée pour demander une recherche d'un emplacement d'atterrissage possible, où le véhicule volant électrique est capable d'atterrir, lorsque l'emplacement d'atterrissage possible n'existe pas sous le véhicule volant électrique ou lorsque le véhicule volant électrique n'est pas capable de maintenir l'attitude stable dans le cas où le véhicule volant électrique atterrit verticalement.

10. Dispositif de commande de vol selon l'une quelconque des revendications 1 à 9, dans lequel
l'unité de détermination de maintien comprend
une unité de détermination d'arrêt (S104, S404, S405) configurée pour déterminer si le véhicule volant électrique est capable de maintenir l'attitude stable dans l'état dans lequel le moteur anormal arrête d'entraîner, et
une unité de détermination de poursuite (S105, S106, S406, S407) configurée pour déterminer si le véhicule volant électrique est capable de maintenir l'attitude stable dans l'état dans lequel le moteur anormal continue d'entraîner.

11. Programme de commande de vol pour commander l'entraînement d'une pluralité de moteurs de vol (81, 81A, 81B) pour amener un véhicule volant électrique (10), qui comprend les moteurs de vol, á voler à une attitude stable, le programme de commande de vol étant configuré pour amener au moins un processeur (41) à fonctionner comme :
une unité de détermination de maintien (S104 à S106, S404 à S407) configurée pour, lorsqu'une anomalie se produit dans les moteurs de vol, déterminer si le véhicule volant électrique est capable de maintenir l'attitude stable pour au moins l'un d'un état dans lequel, parmi les moteurs de vol, un moteur anormal, dans lequel l'anomalie se produit, arrête d'entraîner et d'un état dans lequel le moteur anormal continue d'entraîner ; et
une unité d'ajustement de puissance (S107 à S110, S301 à S303, S408 à S413) configurée pour, sur la base de la détermination que le véhicule volant électrique est capable de maintenir l'attitude stable, effectuer l'ajustement de la puissance, parmi les moteurs de vol, d'au moins l'un d'un moteur normal, dans lequel l'anomalie ne se produit pas, et du moteur anormal pour maintenir le véhicule volant électrique à l'attitude stable.

12. Procédé de commande de vol pour commander l'entraînement d'une pluralité de moteurs de vol (81, 81A, 81B) pour amener un véhicule volant électrique (10), qui comprend les moteurs de vol, à voler à une attitude stable, le procédé de commande de vol devant être exécutée par au moins un processeur (41) et comprenant :
déterminer (S104 à S106, S404 à S407), lorsqu'une anomalie se produit dans les moteurs de vol, si le véhicule volant électrique est capable de maintenir l'attitude stable pour au moins l'un d'un état dans lequel, parmi les moteurs de vol, un moteur anormal, dans lequel l'anomalie se produit, arrête d'entraîner et d'un état dans lequel le moteur anormal continue d'entraîner ; et
effectuer (S107 à S110, S301 à S303, S408 à S413), sur la base de la détermination que le véhicule volant électrique est capable de maintenir l'attitude stable, l'ajustement de la puissance, parmi les moteurs de vol, d'au moins l'un d'un moteur normal, dans lequel l'anomalie ne se produit pas, et du moteur anormal pour maintenir le véhicule volant électrique à l'attitude stable.
